# EUROPEAN PATENT APPLICATION

(11) **EP 4 576 309 A1**
(43) Date of publication of application: **25.06.2025**
(21) Application number: 23917106.9
(22) Date of filing: 24.10.2023
(51) Int. Cl.: H01M 10/0569, H01M 10/054

(54) **SODIUM SECONDARY BATTERY, BATTERY MODULE, BATTERY PACK, AND ELECTRIC DEVICE**

(30) Priority: 16.01.2023 CN 202310070478
(71) Applicant: Contemporary Amperex Technology (Hong Kong) Limited, Central (HK)
(72) Inventor: CHEN, Shigang, Ningde, Fujian 352100 (CN); GUO, Bingkun, Ningde, Fujian 352100 (CN); ZHANG, Xinxin, Ningde, Fujian 352100 (CN); LI, Xiaolong, Ningde, Fujian 352100 (CN); YAO, Shikang, Ningde, Fujian 352100 (CN); LIU, Ben, Ningde, Fujian 352100 (CN)
(74) Representative: Jacob, Reuben Ellis
(86) International application number: PCT/CN2023/126249
(87) International publication number: WO 2024/152638

(57) **Abstract**

The present application provides a sodium secondary battery, a battery module, a battery pack, and an electric device. The sodium secondary battery comprises a positive electrode sheet, a negative electrode sheet, a first electrolyte located on the positive electrode sheet side, and a second electrolyte located on the negative electrode sheet side; the first electrolyte and the second electrolyte comprise different organic solvents, the first electrolyte comprises an ester solvent, a sulfone solvent or a fluoroether solvent, and the second electrolyte comprises an ether solvent or an amide solvent. By matching different organic solvents with the positive/negative electrode sheets respectively, gas production-caused swelling of the battery is reduced, the electrochemical stability window width of the battery is optimized, and the cycling stability of the battery is improved, thereby improving the comprehensive performance of the battery.

## Description

### CROSS-REFERENCE TO RELATED APPLICATIONS

This application claims the benefit of Chinese Patent Application No. 202310070478.0, filed on January 16, 2023 and entitled "SODIUM SECONDARY BATTERY, BATTERY MODULE, BATTERY PACK, AND ELECTRIC APPARATUS".

### TECHNICAL FIELD

This application relates to the technical field of secondary batteries, and in particular, to a sodium secondary battery, a battery module, a battery pack, and an electric apparatus.

### BACKGROUND

Sodium batteries have great application potential in large-scale energy storage due to abundant reserves, low costs, and wide operating temperature range.

Match of solvents in electrolytes with positive/negative electrodes is a key factor affecting overall performance of batteries. However, in the prior art, it is difficult for solvents to match both positive and negative electrode active materials. For example, using a fluoroether solvent in an electrolyte with a high-potential positive electrode material can improve stability of a battery, but the fluoroether solvent is prone to react with sodium metal of a negative electrode, affecting storage performance of the battery and thus failing to meet application requirements of the new-generation electrochemical systems.

### SUMMARY

This application is made in view of the above issues and aims to provide a sodium secondary battery, where the secondary battery includes a first electrolyte and a second electrolyte that contains different organic solvents. With different organic solvents matched with a positive/negative electrode plate respectively, the electrochemical stability window width of the battery is optimized while gas generation and swelling of the battery are alleviated. This improves the cycling stability of the battery, and further improves the overall performance of the battery.

According to a first aspect of this application, a sodium secondary battery is provided, including a positive electrode plate, a negative electrode plate, a first electrolyte located on the side of the positive electrode plate, and a second electrolyte located on the side of the negative electrode plate, where the first electrolyte and the second electrolyte contain different organic solvents, the first electrolyte contains an ester solvent, a sulfone solvent, or a fluoroether solvent, and the second electrolyte contains an ether solvent or an amide solvent.

With the first electrolyte and the second electrolyte containing different organic solvents provided on the side of the positive electrode plate and the side of the negative electrode plate respectively, the advantage of high voltage of the positive electrode active material can be fully utilized, and the disadvantage of high reaction activity of a solvent resistant to high voltage at the negative electrode can be overcome, thereby reducing gas generation of the battery, optimizing the electrochemical stability window width of the battery, improving the cycling stability of the battery under high voltage, and improving the overall performance of the battery.

With the first electrolyte containing the ester solvent, the sulfone solvent, or the fluoroether solvent, and the second electrolyte containing the ether solvent or the amide solvent, the advantages of each solvent can be fully utilized, reducing gas generation and swelling of the battery, optimizing the electrochemical stability window width of the battery, improving the cycling stability of the battery under high voltage, and improving the overall performance of the battery.

In any embodiment, there is at least one interface between the first electrolyte and the second electrolyte.

Having at least one interface between the first electrolyte and the second electrolyte prevents the first electrolyte and the second electrolyte from forming a homogeneous phase, but instead allows them to form independent single phases, thereby avoiding contact between the positive electrode plate and the second electrolyte to reduce decomposition of the second electrolyte at the positive electrode, and avoiding contact between the negative electrode plate and the first electrolyte to reduce active reactions of the first electrolyte at the negative electrode.

In any embodiment, a mass ratio of the first electrolyte to the second electrolyte is from 2/8 to 8/2.

Controlling the mass ratio of the first electrolyte to the second electrolyte within an appropriate range is beneficial to expanding the electrochemical window of the battery, improving the cycling performance and storage performance of the battery, and reducing gas generation rate of the battery, thereby enhancing the safety of the battery.

In any embodiment, the first electrolyte and the second electrolyte are separated by a first separator, where the first separator includes at least one of a perfluorosulfonic acid resin film replaced by sodium ions, a sodium super ionic conductor solid electrolyte, and an oxide solid electrolyte.

The perfluorosulfonic acid resin film (Nafion) replaced by sodium ions, the sodium super ionic conductor solid electrolyte, and the oxide solid electrolyte can maintain separation of the first electrolyte and the second electrolyte, avoiding mutual infiltration between the two, which is equivalent to forming a double-chamber battery structure. However, they can achieve sodium ion exchange between the first electrolyte and the second electrolyte, making the chemical reaction reversible and the battery rechargeable.

In any embodiment, the sodium super ionic conductor solid electrolyte includes Na₃₊ₓM_{y}M'_{2-y}Si_{2-z}P_{z}O₁₂, where M and M' independently include at least one of Zr, Ca, Mg, Zn, La, Ti, and Nb, 0 ≤ x < 1, 0 ≤ y < 2, and 0 ≤ z < 2; and the oxide solid electrolyte includes at least one of Na-β-Al₂O₃ and Na-β"-Al₂O₃, where Na-β-Al₂O₃ includes β-Na₂O·11Al₂O₃ and Na-β"-Al₂O₃ includes β"-Na₂O·5Al₂O₃.

The perfluorosulfonic acid resin film, the sodium super ionic conductor solid electrolyte, and the oxide solid electrolyte can all effectively separate the solvent without hindering sodium ion transmission. This helps to increase the electrochemical stability window width of the battery, reduce the storage swelling rate of the battery, expand the electrochemical window of the battery, reduce the gas generation rate of the battery, and enhance the safety of the battery.

In any embodiment, the sodium secondary battery includes at least two second separators, the first electrolyte and the second electrolyte respectively infiltrate into different second separators, the second separator includes at least one of a polyethylene film, a polypropylene film, and a glass fiber film, and an adding volume per unit capacity V of each of the first electrolyte and the second electrolyte is 3 µL/mAh < V < 10 µL/mAh.

The adding volumes per unit capacity V of the first electrolyte and the second electrolyte falling within the range of a lean electrolyte solution enables the electrolyte solution to be almost entirely adsorbed on the second separator, reducing the amount of free electrolyte solution, thereby avoiding mutual infiltration between the first electrolyte and the second electrolyte. Adding a small amount of the first electrolyte and the second electrolyte dropwise is beneficial to achieving separation between the two, expanding the electrochemical window of the battery, improving the cycling stability of the battery, and reducing the gas generation rate of the battery, thereby improving the safety of the battery.

In any embodiment, a viscosity of the first electrolyte and a viscosity of the second electrolyte are both greater than 500 mPa·s, optionally greater than 1000 mPa·s.

Both the first electrolyte and the second electrolyte have high viscosity and low fluidity, enabling them to form a distinct phase interface and making it difficult for mutual infiltration to occur, thus achieving phase separation.

In any embodiment, the first electrolyte and the second electrolyte both include a sodium salt, and based on total masses of the first electrolyte and the second electrolyte respectively, mass percentages of the sodium salts in the first electrolyte and the second electrolyte are both 2% to 70%, optionally 15% to 20%.

The mass percentages of the sodium salts in the first electrolyte and the second electrolyte are both controlled to 2% to 70% based on the total masses of the first electrolyte and the second electrolyte respectively. A sodium salt mass percentage of a relatively broad range expands the application field of the sodium secondary battery. Further controlling both the mass percentages of the sodium salts in the first electrolyte and the second electrolyte to 15% to 20% based on the total masses of the first electrolyte and the second electrolyte respectively is beneficial to further expanding the electrochemical window of the battery, enhancing the cycling stability of the battery, reducing the gas generation rate of the battery, and improving the safety of the battery.

In any embodiment, the sodium salt includes one or more of sodium nitrate, sodium perchlorate, sodium hexafluorophosphate, sodium tetrafluoroborate, sodium tetrafluoroyttrium, sodium hexafluoroarsenate, sodium acetate, sodium trifluoroacetate, sodium bis(oxalato)borate, sodium difluoro(oxalato)borate, sodium tetraphenylborate, sodium trifluoromethanesulfonate, sodium bis(fluorosulfonyl)imide, sodium bis(trifluoromethanesulfonyl)imide, and sodium (perfluorobutylsulfonyl)imide, optionally includes one or more of sodium hexafluorophosphate, sodium trifluoromethanesulfonate, sodium bis(fluorosulfonyl)imide, and sodium bis(trifluoromethanesulfonyl)imide, and optionally includes one or more of sodium perchlorate, sodium hexafluorophosphate, sodium bis(fluorosulfonyl)imide, and sodium bis(trifluoromethanesulfonyl)imide.

The sodium salts are all beneficial to expanding the electrochemical window of the battery, enhancing the storage performance of the battery, and reducing the gas generation rate of the battery, thereby improving the safety of the battery.

In any embodiment, the first electrolyte and/or the second electrolyte includes a polymer, and based on the total masses of the first electrolyte and the second electrolyte respectively, mass percentages of the polymer in the first electrolyte and the second electrolyte are both 2% to 30%, optionally 10% to 20%.

Introducing the polymers into the first electrolyte and/or the second electrolyte can effectively reduce the fluidity of the first electrolyte and the second electrolyte, achieving phase separation between the first electrolyte and the second electrolyte while reducing the solvation effect of sodium ions. This further reduces the gas generation rate, and improves the storage performance and safety of the battery. Controlling both the mass percentages of the polymers in the first electrolyte and the second electrolyte to 2% to 30% based on the total masses of the first electrolyte and the second electrolyte respectively is beneficial to expanding the electrochemical window of the battery, improving the cycling performance and storage performance of the battery, reducing the gas generation rate of the battery, and enhancing the safety of the battery. Further controlling both the mass percentages of the polymers in the first electrolyte and the second electrolyte to 10% to 20% based on the total masses of the first electrolyte and the second electrolyte respectively is beneficial to further expanding the electrochemical window of the battery, improving the cycling performance and storage performance of the battery, reducing the gas generation rate of the battery, and improving the safety of the battery.

In any embodiment, the polymer includes one or more of polyethylene oxide, polyethylene glycol, polyvinylpyrrolidone, polymethyl methacrylate, polyvinylidene fluoride, polyvinyl alcohol, polyacrylonitrile, polyvinyl chloride, polyacrylamide, polytrimethylene carbonate, and perfluoropolyether.

The polymers are all beneficial to expanding the electrochemical window of the battery, improving the cycling performance and storage performance of the battery, reducing the gas generation rate of the battery, and enhancing the safety of the battery.

In any embodiment, the ester solvent includes one or more of ethylene carbonate (EC), propylene carbonate (PC), butylene carbonate (BC), vinylene carbonate (VC), fluoroethylene carbonate (FEC), ethyl methyl carbonate (EMC), dimethyl carbonate (DMC), diethyl carbonate (DEC), dipropyl carbonate (DPC), methyl propyl carbonate (MPC), ethyl propyl carbonate (EPC), gamma-butyrolactone (BL), 1,3-propane sultone (1,3-PS), methyl propionate (MP), methyl butyrate (MB), ethyl acetate (EA), ethyl propionate (EP), propyl propionate (PP), and ethyl butyrate (EB);
the sulfone solvent includes one or more of dimethyl sulfoxide (DMSO), ethyl methyl sulfone (EMS), ethyl isopropyl sulfone (EIS), ethyl vinyl sulfone (EVS), sulfolane (SL), trifluoromethyl ethyl sulfone (FMES), trifluoromethyl propyl sulfone (FMPS), 1,1,1-trifluoro-3-(methylsulfonyl)propane (FPMS), 1,1,1-trifluoro-2-(methylsulfonyl)ethane (TFEMS), and 1,1,2,2-tetrafluoro-3-(methylsulfonyl)propane (TFPMS);
the fluoroether solvents includes one or more of 2,2,3,3-tetrafluoro-1,4-dimethoxybutane (FDMB), 2-(2-ethoxyethoxy)-1,1,1-trifluoroethane (F3DEE), 1,2-bis(2,2-difluoroethoxy)ethane (F4DEE), 2-(2-(2,2-difluoroethoxy)ethoxy)-1,1,1-trifluoroethane (F5DEE), 1,2-bis(2,2,2-trifluoroethoxy)ethane (F6DEE), 1,1,1,3,3,3-hexafluoroisopropyl methyl ether (HME), methyl ether 2,2,2-trifluoroethyl-1,1,2,3,3,3-hexafluoropropyl ether (THE), 2,2-bis(trifluoromethyl)-1,3-dioxolane (TFDOL), 2,2-dimethoxy-4-(trifluoromethyl)-1,3-dioxolane (DTDOL), 2-ethoxy-4-(trifluoromethyl)-1,3-dioxolane (ETDOL), and octafluorotetrahydrofuran (PFTHF);
the ether solvent includes one or more of ethylene glycol dimethyl ether (DME), diethylene glycol dimethyl ether (DEGDME), triethylene glycol dimethyl ether (TRGDME), tetraethylene glycol dimethyl ether (TEGDME), ethylene glycol diethyl ether (DEE), diethylene glycol diethyl ether (DEGDEE), diisopropyl ether (DIE), dibutyl ether (DBE), diethylene glycol dibutyl ether (DEGDBE), 1,4-dimethoxybutane (DMB), 1,4-diethoxybutane (DEB), 1,3-dioxolane, tetrahydrofuran (DOL), tetrahydrofuran (THF), 15-crown-5 (15-Crown-5), 12-crown-4 (12-Crown-4), and 18-crown-6 (18-Crown-6); and
the amide solvent includes one or more of N,N-dimethylformamide (DMF), N,N-dimethylacetamide (DMA), N,N-dimethylacetoacetamide (DMAA), 1,1,1-trifluoro-N,N-dimethylmethanesulfonamide (DMCF3SA), N,O-bis(trimethylsilyl)trifluoroacetamide (BSTFA), 2,3,6-trifluorobenzenesulfonamide (TFBFSA), N,N-dimethyl-4-fluorobenzenesulfonamide (DMFBFSA), and N-methyl-N-(trimethylsilyl)trifluoroacetamide (MSTFA).

The combination use of the ester solvent, sulfone solvent, fluoroether solvent, ether solvent, or amide solvent can effectively improve the high-voltage cycling stability, storage performance, and safety of the sodium secondary battery, expanding the applications of the sodium secondary battery.

In any embodiment, the sodium secondary battery is a sodium metal battery.

In any embodiment, the sodium secondary battery is a sodium secondary battery with no negative electrode.

In any embodiment, the positive electrode plate includes a positive electrode active material, where the positive electrode active material includes at least one of a layered transition metal oxide, a polyanion compound, and a Prussian blue compound, including one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

The positive electrode active materials are all beneficial to expanding the electrochemical window of the battery, enhancing the storage performance of the battery, reducing the gas generation rate of the battery, and improving the safety of the battery.

In any embodiment, a surface of the positive electrode active material has a coating layer, the coating layer includes one or more of a carbon material, ZrO₂, TiO₂, polyaniline, polypyrrole, poly(3,4-ethylenedioxythiophene), alumina, zinc oxide, titanium oxide, zirconium oxide, magnesium oxide, silicon oxide, lanthanum oxide, sodium fluoride, lithium fluoride, and aluminum fluoride, and the carbon material includes one or more of amorphous carbon, graphite, and graphene.

The positive electrode active material including the coating layer is beneficial to improving the high-voltage cycling stability and storage performance of the battery.

In any embodiment, a thickness of the coating layer is from 2 nm to 1000 nm, optionally from 10 nm to 100 nm.

Controlling the thickness of the coating layer within an appropriate range is beneficial to improving the high-voltage cycling stability and electrical performance of the battery.

In any embodiment, the negative electrode plate includes a negative electrode current collector and a primer layer disposed on at least one surface of the negative electrode current collector, where the primer layer includes one or more of carbon nanotubes, graphite, graphene, silver composite carbon nanoparticles, and tin composite carbon nanoparticles.

The primer layer not only has excellent conductivity but also facilitates uniform deposition of metal ions on the surface of the current collector, thereby improving the cycling performance and safety of the battery.

In any embodiment, a surface density of the primer layer is 5 g/m² to 50 g/m².

The primer layer with the surface density of 5 g/m² to 50 g/m² is beneficial to uniform distribution of nucleation sites and promoting uniform deposition of metal, without affecting electron transmission behavior.

In any embodiment, a thickness of the primer layer is from 2 µm to 100 µm.

Controlling the thickness of the primer layer to 2 µm to 100 µm can provide enough nucleation sites to facilitate uniform deposition of metal ions and inhibit dendrites.

A second aspect of this application provides a battery module including the sodium secondary battery of the first aspect of this application.

A third aspect of this application provides a battery pack including the sodium secondary battery of the first aspect of this application or the battery module of the second aspect of this application.

A fourth aspect of this application provides an electric apparatus including at least one of the sodium secondary battery of the first aspect of this application, the battery module of the second aspect of this application, and the battery pack of the third aspect of this application.

### BRIEF DESCRIPTION OF DRAWINGS

FIG. 1 is a schematic diagram of a sodium secondary battery according to an embodiment of this application;
FIG. 2 is a schematic diagram of a sodium secondary battery according to an embodiment of this application;
FIG. 3 is an exploded view of the sodium secondary battery according to the embodiment of this application shown in FIG. 2;
FIG. 4 is a schematic diagram of a battery module according to an embodiment of this application;
FIG. 5 is a schematic diagram of a battery pack according to an embodiment of this application;
FIG. 6 is an exploded view of the battery pack according to the embodiment of this application in FIG. 5; and
FIG. 7 is a schematic diagram of an electric apparatus using a sodium secondary battery as a power source according to an embodiment of this application.

### Description of reference signs:

1 battery pack; 2 upper box body; 3 lower box body; 4 battery module; 5 secondary battery; 51 housing; 52 electrode assembly; 53 cover plate; 6 sodium secondary battery; 61 positive electrode plate; 62 negative electrode plate; 631 first electrolyte; 632 second electrolyte; and 64 first separator.

### DESCRIPTION OF EMBODIMENTS

The following specifically discloses in detail embodiments of the sodium secondary battery, battery module, battery pack, and electric apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components may be included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In the prior art, how solvents in electrolytes are matched with positive and negative electrode materials affects performance of sodium batteries. For example, in sodium metal batteries or sodium secondary batteries with no negative electrode, polyanion compounds or high-energy-density layered transition metal oxides are typically used as positive electrode materials, and sodium metal or sodium metal phases deposited on the negative electrode side in a charging and discharging process of sodium batteries are used as negative electrode materials. Layered transition metal oxides used as positive electrode materials have a high operating potential. Although ether solvents have relatively low reactive activity with sodium metal on the negative electrode side, they are not resistant to high voltage on the positive electrode side, affecting stability of batteries. However, although fluoroether solvents still have excellent stability on the positive electrode side under high voltage, they have high reactive activity with sodium metal on the negative electrode side, affecting the storage performance and service life of batteries. Therefore, new electrolyte systems need to be developed, so that sodium batteries can meet application requirements of the new generation of electrochemical systems.

### [Sodium secondary battery]

In view of this, this application proposes a sodium secondary battery, including a positive electrode plate, a negative electrode plate, a first electrolyte located on the side of the positive electrode plate, and a second electrolyte located on the side of the negative electrode plate, where the first electrolyte and the second electrolyte contain different organic solvents.

In this specification, the term "sodium secondary battery" refers to a secondary battery that uses sodium ions as charge carriers. A negative electrode active material in the sodium secondary battery can be any material, including but not limited to hard carbon, sodium metal, transition metal oxide, transition metal selenide, and alloy. The sodium metal can be sodium metal pre-deposited at the negative electrode plate before the battery is packaged, or can be sodium metal deposited at the negative electrode in a cycling process of the battery. A secondary battery that uses a current collector as a negative electrode before the battery is packaged and has no sodium metal pre-deposit on a negative electrode plate is referred to as a sodium secondary battery with no negative electrode, which is also a type of sodium secondary battery.

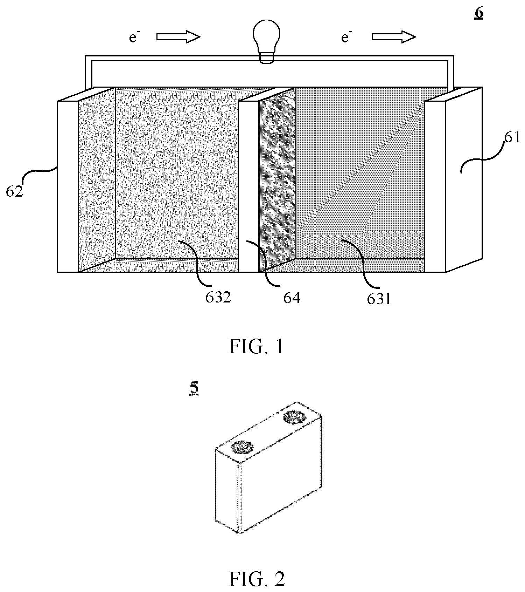

In some embodiments, the structure of the sodium secondary battery provided in this application is shown in FIG. 1. The sodium secondary battery 6 includes a positive electrode plate 61, a negative electrode plate 62, a first electrolyte 631 located on the side of the positive electrode plate 61, and a second electrolyte 632 located on the side of the negative electrode plate 62. The first electrolyte 631 located on the side of the positive electrode plate 61 and the second electrolyte 632 located on the side of the negative electrode plate 62 contain different organic solvents, allowing the solvents to be matched according to characteristics of a positive electrode active material on the positive electrode plate 61 and a negative electrode active material on the negative electrode plate 62. This not only can fully utilize the high voltage advantage of the positive electrode active material but also can overcome the drawback of high reaction activity of the solvent resistant to high voltage at the negative electrode.

The secondary battery includes a first electrolyte and a second electrolyte that contains different organic solvents. With different organic solvents matched with a positive/negative electrode plate respectively, the electrochemical stability window width of the battery is optimized while gas generation and swelling at the negative electrode are alleviated. This improves the cycling stability of the battery under high voltage, and further improves the overall performance of the battery.

In some embodiments, the first electrolyte contains an ester solvent, a sulfone solvent, or a fluoroether solvent, and the second electrolyte contains an ether solvent or an amide solvent.

In this specification, the term "ester solvent" refers to an organic solvent containing an ester group. Optionally, it may be substituted or unsubstituted by a functional group.

In this specification, the term "sulfone solvent" refers to an organic solvent containing a sulfone group. Optionally, it may be substituted or unsubstituted by a functional group.

In this specification, the term "ether solvent" refers to a solvent with an ether compound molecule, and the ether solvent molecule does not contain element fluorine.

In this specification, the term "fluoroether solvent" refers to an ether compound solvent containing element fluorine. In some embodiments, the fluoroether solvent is obtained by directly substituting the ether solvent molecule with fluorine.

The fluoroether solvent in the electrolyte solution of this application is not an inert fluoroether solvent with high steric hindrance, but a fluoroether solvent that can form a first solvation layer with a sodium salt in the electrolyte solution. In some embodiments, at 25°C, the solubility of sodium hexafluorophosphate in the fluoroether solvent is greater than 16 g. In some embodiments, at 25°C, the solubility of a sodium bis(fluorosulfonyl)imide salt in the fluoroether diluent is greater than 40 g. Interaction between the fluoroether solvent that can participate in the first solvation layer and the sodium salt is relatively strong, so the sodium salt has a high solubility in the corresponding fluoroether solvent.

In this specification, the term "amide solvent" refers to an organic solvent containing an amide group. Optionally, it may be substituted or unsubstituted by a functional group.

In some embodiments, the organic solvent in the first electrolyte includes an ester solvent, and the organic solvent in the second electrolyte includes an ether solvent. In some embodiments, the organic solvent in the first electrolyte includes an ester solvent, and the organic solvent in the second electrolyte includes an amide solvent. In some embodiments, the organic solvent in the first electrolyte includes a sulfone solvent, and the organic solvent in the second electrolyte includes an ether solvent. In some embodiments, the organic solvent in the first electrolyte includes a fluoroether solvent, and the organic solvent in the second electrolyte includes an ether solvent. In some embodiments, the organic solvent in the first electrolyte includes a sulfone solvent, and the organic solvent in the second electrolyte includes an amide solvent. In some embodiments, the organic solvent in the first electrolyte includes a fluoroether solvent, and the organic solvent in the second electrolyte includes an amide solvent.

The ester solvents, sulfone solvent, and fluoroether solvent all have a high highest occupied molecular orbital (HOMO) energy level, capable of withstanding the high operating potential of the positive electrode active material. However, the ester solvent, sulfone solvent, or fluoroether solvent also exhibits higher reactive activity with sodium metal at the negative electrode. The ether solvent and the amide solvent have high stability with sodium metal on the negative electrode.

Therefore, with the first electrolyte containing the ester solvent, the sulfone solvent, or the fluoroether solvent, and the second electrolyte containing the ether solvent or the amide solvent, the advantages of each solvent can be fully utilized, reducing gas generation and swelling of the battery, optimizing the electrochemical stability window width of the battery, improving the cycling stability of the battery under high voltage, and improving the overall performance of the battery.

In some embodiments, the ester solvent includes one or more of ethylene carbonate (EC), propylene carbonate (PC), butylene carbonate (BC), vinylene carbonate (VC), fluoroethylene carbonate (FEC), ethyl methyl carbonate (EMC), dimethyl carbonate (DMC), diethyl carbonate (DEC), dipropyl carbonate (DPC), methyl propyl carbonate (MPC), ethyl propyl carbonate (EPC), gamma-butyrolactone (BL), 1,3-propane sultone (1,3-PS), methyl propionate (MP), methyl butyrate (MB), ethyl acetate (EA), ethyl propionate (EP), propyl propionate (PP), and ethyl butyrate (EB).

In some embodiments, the sulfone solvent includes one or more of dimethyl sulfoxide (DMSO), ethyl methyl sulfone (EMS), ethyl isopropyl sulfone (EIS), ethyl vinyl sulfone (EVS), sulfolane (SL), trifluoromethyl ethyl sulfone (FMES), trifluoromethyl propyl sulfone (FMPS), 1,1,1-trifluoro-3-(methylsulfonyl)propane (FPMS), 1,1,1-trifluoro-2-(methylsulfonyl)ethane (TFEMS), and 1,1,2,2-tetrafluoro-3-(methylsulfonyl)propane (TFPMS).

In some embodiments, the fluoroether solvents includes one or more of 2,2,3,3-tetrafluoro-1,4-dimethoxybutane (FDMB), 2-(2-ethoxyethoxy)-1,1,1-trifluoroethane (F3DEE), 1,2-bis(2,2-difluoroethoxy)ethane (F4DEE), 2-(2-(2,2-difluoroethoxy)ethoxy)-1,1,1-trifluoroethane (F5DEE), 1,2-bis(2,2,2-trifluoroethoxy)ethane (F6DEE), 1,1,1,3,3,3-hexafluoroisopropyl methyl ether (HME), methyl ether 2,2,2-trifluoroethyl-1,1,2,3,3,3-hexafluoropropyl ether (THE), 2,2-bis(trifluoromethyl)-1,3-dioxolane (TFDOL), 2,2-dimethoxy-4-(trifluoromethyl)-1,3-dioxolane (DTDOL), 2-ethoxy-4-(trifluoromethyl)-1,3-dioxolane (ETDOL), and octafluorotetrahydrofuran (PFTHF).

In some embodiments, the ether solvent includes one or more of ethylene glycol dimethyl ether (DME), diethylene glycol dimethyl ether (DEGDME), triethylene glycol dimethyl ether (TRGDME), tetraethylene glycol dimethyl ether (TEGDME), ethylene glycol diethyl ether (DEE), diethylene glycol diethyl ether (DEGDEE), diisopropyl ether (DIE), dibutyl ether (DBE), diethylene glycol dibutyl ether (DEGDBE), 1,4-dimethoxybutane (DMB), 1,4-diethoxybutane (DEB), 1,3-dioxolane, tetrahydrofuran (DOL), tetrahydrofuran (THF), 15-crown-5 (15-Crown-5), 12-crown-4 (12-Crown-4), and 18-crown-6 (18-Crown-6).

In some embodiments, the amide solvent includes one or more of N,N-dimethylformamide (DMF), N,N-dimethylacetamide (DMA), N,N-dimethylacetoacetamide (DMAA), 1,1,1-trifluoro-N,N-dimethylmethanesulfonamide (DMCF3SA), N,O-bis(trimethylsilyl)trifluoroacetamide (BSTFA), 2,3,6-trifluorobenzenesulfonamide (TFBFSA), N,N-dimethyl-4-fluorobenzenesulfonamide (DMFBFSA), and N-methyl-N-(trimethylsilyl)trifluoroacetamide (MSTFA).

In some embodiments, there is at least one interface between the first electrolyte and the second electrolyte.

In some embodiments, there is one interface between the first electrolyte and the second electrolyte. In some embodiments, there are two or more interfaces between the first electrolyte and the second electrolyte.

The interface between the first electrolyte and the second electrolyte can be formed in any manner. In some embodiments, the first electrolyte and the second electrolyte are in contact with each other, but there is a clear interface phase between them. In some embodiments, multiple interfaces are formed between the first electrolyte and the second electrolyte by separating objects to avoid direct contact between them.

Having at least one interface between the first electrolyte and the second electrolyte prevents the first electrolyte and the second electrolyte from forming a homogeneous phase, but instead allows them to form independent single phases, thereby avoiding contact between the positive electrode plate and the second electrolyte to reduce decomposition of the second electrolyte at the positive electrode, and avoiding contact between the negative electrode plate and the first electrolyte to reduce active reactions of the first electrolyte at the negative electrode.

In some embodiments, a mass ratio of the first electrolyte to the second electrolyte is from 2/8 to 8/2.

In some embodiments, a mass ratio of the first electrolyte to the second electrolyte is optionally 2/8, 3/7, 4/6, 5/5, 6/4, 7/3, or 8/2.

Controlling the mass ratio of the first electrolyte to the second electrolyte within an appropriate range is beneficial to expanding the electrochemical window of the battery, improving the cycling performance and storage performance of the battery, and reducing gas generation rate of the battery, thereby enhancing the safety of the battery.

In some embodiments, still referring to FIG. 1, the first electrolyte 631 and the second electrolyte 632 are separated by a first separator 64, where the first separator 64 includes at least one of a perfluorosulfonic acid resin film replaced by sodium ions, a sodium super ionic conductor solid electrolyte, and an oxide solid electrolyte.

The first separator 64 can maintain the separation of the first electrolyte 631 and the second electrolyte 632, avoiding mutual infiltration between the two, which is equivalent to forming a double-chamber battery structure. However, it can achieve sodium ion exchange between the first electrolyte 631 and the second electrolyte 632, making the chemical reaction reversible and the battery rechargeable.

The above technical solution can effectively separate different electrolytes in the sodium secondary battery, thereby improving the long-term reliability, cycling stability, and storage stability of the battery.

In some embodiments, the sodium super ionic conductor solid electrolyte includes Na₃₊ₓM_{y}M'_{2-y}Si_{2-z}P_{z}O₁₂, where M and M' independently include at least one of Zr, Ca, Mg, Zn, La, Ti, and Nb, 0 ≤ x < 1, 0 ≤ y < 2, and 0 ≤ z < 2.

In some embodiments, x is optionally 0, 0.1, 0.2, 0.3, 0.4, 0.5, 0.6, 0.7, 0.8, or 0.9.

In some embodiments, y is optionally 0, 0.1, 0.2, 0.3, 0.4, 0.5, 0.6, 0.7, 0.8, 0.9, 1, 1.1, 1.2, 1.3, 1.4, 1.5, 1.6, 1.7, 1.8, or 1.9.

In some embodiments, z is optionally 0, 0.1, 0.2, 0.3, 0.4, 0.5, 0.6, 0.7, 0.8, 0.9, 1, 1.1, 1.2, 1.3, 1.4, 1.5, 1.6, 1.7, 1.8, or 1.9.

In some embodiments, the sodium super ionic conductor solid electrolyte includes at least one of Na_{3.4}Zr_{1.9}Zn_{0.1}Si_{2.2}P_{0.8}O₁₂, Na₃Zr_{1.75}Mg_{0.25}Si₂PO₁₂, Na_{3.3}Zr_{1.7}La_{0.3}Si₂PO₁₂, and Na_{3.1}Ca_{0.05}Zr_{1.95}Si₂PO₁₂.

In some embodiments, the oxide solid electrolyte includes at least one of Na-β-Al₂O₃ and Na-β"-Al₂O₃, where the Na-β-Al₂O₃ includes β-Na₂O·11Al₂O₃, and the Na-β"-Al₂O₃ includes β"-Na₂O·5Al₂O₃.

In some embodiments, the sodium secondary battery contains at least two second separators, the first electrolyte and the second electrolyte respectively infiltrate into different second separators, and the second separator includes at least one of a polyethylene film, a polypropylene film, or a glass fiber film.

The polyethylene film, polypropylene film, or glass fiber film is a commonly used separator in secondary batteries, and can be penetrated by solvents. Therefore, at least two separators are disposed in the sodium secondary battery and different electrolytes respectively infiltrate different separators, so as to reduce mutual infiltration between the first electrolyte and the second electrolyte.

In some embodiments, the first electrolyte infiltrates the polyethylene film, and the second electrolyte infiltrates the glass fiber film. In some embodiments, the first electrolyte infiltrates the polypropylene film, and the second electrolyte infiltrates the glass fiber film. In some embodiments, the first electrolyte infiltrates the glass fiber film, and the second electrolyte infiltrates the polypropylene film.

The above technical solution has low costs and is suitable for existing battery production technologies, and therefore is suitable to be used in large scale.

In some embodiments, an adding volume per unit capacity V of each of the first electrolyte and the second electrolyte is 3 µL/mAh < V < 10 µL/mAh.

In this document, the term "adding volume per unit capacity V" is calculated by dividing the adding volume of the first electrolyte or the second electrolyte by the capacity of the corresponding battery.

The capacity of the corresponding battery is obtained through performing grading on batteries with the same load and the same type of positive electrode active material and negative electrode active material.

In some embodiments, the adding volumes per unit capacity V of the first electrolyte and the second electrolyte are optionally 3 µL/mAh, 4 µL/mAh, 5 µL/mAh, 6 µL/mAh, 7 µL/mAh, 8 µL/mAh, 9 µL/mAh, or 10 µL/mAh.

The adding volumes per unit capacity V of the first electrolyte and the second electrolyte falling within the range of a lean electrolyte solution enables the electrolyte solution to be almost entirely adsorbed on the second separator, reducing the amount of free electrolyte solution, thereby avoiding mutual infiltration between the first electrolyte and the second electrolyte. Adding a small amount of the first electrolyte and the second electrolyte dropwise is beneficial to achieving separation between the two, expanding the electrochemical window of the battery, improving the cycling stability of the battery, and reducing the gas generation rate of the battery, thereby improving the safety of the battery.

In some embodiments, a viscosity of the first electrolyte and a viscosity of the second electrolyte are both greater than 500 mPa·s, optionally greater than 1000 mPa·s. In some embodiments, the viscosity of the first electrolyte may optionally be 501 mPa·s, 600 mPa·s, 700 mPa·s, 800 mPa·s, 900 mPa·s, 1000 mPa·s, 1001 mPa·s, 1500 mPa·s, 2000 mPa·s, 2500 mPa·s, 3000 mPa·s, 3500 mPa·s, 4000 mPa·s, 4500 mPa·s, 4500 mPa·s, 5000 mPa·s, 6000 mPa·s, 7000 mPa·s, 8000 mPa·s, 9000 mPa·s, 10000 mPa·s, 20000 mPa·s, 30000 mPa·s, 40000 mPa·s, 50000 mPa·s, 60000 mPa·s, 70000 mPa·s, 80000 mPa·s, 90000 mPa·s or 100000 mPa·s, and the viscosity of the second electrolyte may optionally be 501 mPa·s, 600 mPa·s, 700 mPa·s, 800 mPa·s, 900 mPa·s, 1000 mPa·s, 1001 mPa·s, 1500 mPa·s, 2000 mPa·s, 2500 mPa·s, 3000 mPa·s, 3500 mPa·s, 4000 mPa·s, 4500 mPa·s, 4500 mPa·s, 5000 mPa·s, 6000 mPa·s, 7000 mPa·s, 8000 mPa·s, 9000 mPa·s, 10000 mPa·s, 20000 mPa·s, 30000 mPa·s, 40000 mPa·s, 50000 mPa·s, 60000 mPa·s, 70000 mPa·s, 80000 mPa·s, 90000 mPa·s or 100000 mPa·s.

Both the first electrolyte and the second electrolyte have high viscosity and low fluidity, enabling them to form a distinct phase interface and making it difficult for mutual infiltration to occur, thus achieving phase separation.

In some embodiments, both the first electrolyte and the second electrolyte include a polymer.

Introducing the polymers into both the first electrolyte and the second electrolyte can effectively reduce the fluidity of the first electrolyte and the second electrolyte, achieving phase separation between the first electrolyte and the second electrolyte while reducing the solvation effect of sodium ions. This further reduces the gas generation rate, and improves the storage performance and safety of the battery.

In some embodiments, both the first electrolyte and the second electrolyte include a sodium salt, and based on a total mass of the first electrolyte, a mass percentage of the sodium salt in the first electrolyte is 2% to 70%, optionally 15% to 20%, and based on a total mass of the second electrolyte, a mass percentage of the sodium salt in the second electrolyte is 2% to 70%, optionally 15% to 20%.

In some embodiments, based on the total masses of the first electrolyte and the second electrolyte respectively, the mass percentages of both the sodium salts in the first electrolyte and the second electrolyte are optionally 2%, 5%, 10%, 15%, 20%, 25%, 30%, 35%, 40%, 45%, 50%, 55%, 60%, 65%, or 70%.

The mass percentages of both the sodium salts in the first electrolyte and the second electrolyte are controlled to 2% to 70% based on the total masses of the first electrolyte and the second electrolyte respectively. A sodium salt mass percentage of a relatively broad range expands the application field of the sodium secondary battery. Further controlling both the mass percentages of the sodium salts in the first electrolyte and the second electrolyte to 15% to 20% based on the total masses of the first electrolyte and the second electrolyte respectively is beneficial to further expanding the electrochemical window of the battery, enhancing the cycling stability of the battery, reducing the gas generation rate of the battery, and improving the safety of the battery.

In some embodiments, the sodium salt includes one or more of sodium nitrate, sodium perchlorate, sodium hexafluorophosphate, sodium tetrafluoroborate, sodium tetrafluoroyttrium, sodium hexafluoroarsenate, sodium acetate, sodium trifluoroacetate, sodium bis(oxalato)borate, sodium difluoro(oxalato)borate, sodium tetraphenylborate, sodium trifluoromethanesulfonate, sodium bis(fluorosulfonyl)imide, sodium bis(trifluoromethanesulfonyl)imide, and sodium (perfluorobutylsulfonyl)imide, optionally includes one or more of sodium hexafluorophosphate, sodium trifluoromethanesulfonate, sodium bis(fluorosulfonyl)imide, and sodium bis(trifluoromethanesulfonyl)imide, and optionally includes one or more of sodium perchlorate, sodium hexafluorophosphate, sodium bis(fluorosulfonyl)imide, and sodium bis(trifluoromethanesulfonyl)imide.

In some embodiments, the first electrolyte includes sodium perchlorate, and the second electrolyte includes sodium perchlorate. In some embodiments, the first electrolyte includes sodium perchlorate, and the second electrolyte includes sodium hexafluorophosphate. In some embodiments, the first electrolyte includes sodium hexafluorophosphate, and the second electrolyte includes sodium perchlorate. In some embodiments, the first electrolyte includes sodium perchlorate, and the second electrolyte includes sodium bis(fluorosulfonyl)imide. In some embodiments, the first electrolyte includes sodium hexafluorophosphate, and the second electrolyte includes sodium bis(trifluoromethanesulfonyl)imide. The sodium salts are both beneficial to expanding the electrochemical window of the battery, enhancing the storage performance of the battery, and reducing the gas generation rate of the battery, thereby improving the safety of the battery.

In some embodiments, both the first electrolyte and the second electrolyte include a sodium salt and an organic solvent, the sodium salt of the first electrolyte includes one or more of sodium perchlorate, sodium hexafluorophosphate, sodium bis(fluorosulfonyl)imide, and sodium bis(trifluoromethanesulfonyl)imide, the organic solvent of the first electrolyte includes one of an ester solvent, a sulfone solvent, and a fluoroether solvent, the second electrolyte includes sodium hexafluorophosphate, and the second electrolyte includes an ether solvent.

In some embodiments, both the first electrolyte and the second electrolyte include a sodium salt and an organic solvent, the sodium salt of the first electrolyte includes one or more of sodium hexafluorophosphate, sodium bis(fluorosulfonyl)imide, and sodium perchlorate, the organic solvent of the first electrolyte includes one or more of ethyl methyl carbonate, ethylene carbonate, propylene carbonate, dimethyl carbonate, 2-(2-ethoxyethoxy)-1,1,1-trifluoroethane, and dimethyl sulfoxide, the sodium salt of the second electrolyte includes one or more of sodium hexafluorophosphate and sodium bis(fluorosulfonyl)imide, and the organic solvent of the second electrolyte includes one or more of ethylene glycol dimethyl ether, diethylene glycol dimethyl ether, and 15-crown-5.

In some embodiments, the first electrolyte and/or the second electrolyte includes a polymer, based on the total mass of the first electrolyte, a mass percentage of the polymer in the first electrolyte is 2% to 30%, optionally 10% to 20%, and based on the total mass of the second electrolyte, a mass percentage of the polymer in the second electrolyte is 2% to 30%, optionally 10% to 20%.

In some embodiments, the first electrolyte includes a polymer, and based on the total mass of the first electrolyte, the mass percentage of the polymer in the first electrolyte is optionally 2%, 5%, 8%, 10%, 12%, 15%, 18%, 20%, 23%, 25%, 27%, or 30%.

In some embodiments, the second electrolyte includes a polymer, and based on the total mass of the second electrolyte, the mass percentage of the polymer in the second electrolyte is optionally 2%, 5%, 8%, 10%, 12%, 15%, 18%, 20%, 23%, 25%, 27%, or 30%.

Controlling both the mass percentages of the polymers in the first electrolyte and the second electrolyte to 2% to 30% based on the total masses of the first electrolyte and the second electrolyte respectively is beneficial to expanding the electrochemical window of the battery, improving the cycling performance and storage performance of the battery, reducing the gas generation rate of the battery, and enhancing the safety of the battery.

Further controlling both the mass percentages of the polymers in the first electrolyte and the second electrolyte to 10% to 20% based on the total masses of the first electrolyte and the second electrolyte respectively is beneficial to further expanding the electrochemical window of the battery, improving the cycling performance and storage performance of the battery, reducing the gas generation rate of the battery, and improving the safety of the battery.

In some embodiments, the polymer includes one or more of polyethylene oxide, polyethylene glycol, polyvinylpyrrolidone, polymethyl methacrylate, polyvinylidene fluoride, polyvinyl alcohol, polyacrylonitrile, polyvinyl chloride, polyacrylamide, polytrimethylene carbonate, and perfluoropolyether.

In some embodiments, the polymer includes polyethylene oxide. In some embodiments, the polymer includes polyvinylpyrrolidone. In some embodiments, the polymer includes polyvinylidene fluoride. In some embodiments, the polymer includes polyethylene oxide and perfluoropolyether. In some embodiments, the polymer includes polyethylene oxide and polyvinylpyrrolidone.

The polymers are all beneficial to expanding the electrochemical window of the battery, improving the cycling performance and storage performance of the battery, reducing the gas generation rate of the battery, and enhancing the safety of the battery.

In some embodiments, both the first electrolyte and the second electrolyte include a sodium salt, an organic solvent, and a polymer. The sodium salt of the first electrolyte includes one or more of sodium hexafluorophosphate, sodium bis(fluorosulfonyl)imide, and sodium perchlorate, the organic solvent of the first electrolyte includes one or more of ethyl methyl carbonate, ethylene carbonate, propylene carbonate, dimethyl carbonate, 2-(2-ethoxyethoxy)-1,1,1-trifluoroethane, and dimethyl sulfoxide, and the polymer of the first electrolyte includes one or more of polyvinylidene fluoride, polyethylene oxide, and perfluoropolyether. The sodium salt of the second electrolyte includes one or more of sodium hexafluorophosphate and sodium bis(fluorosulfonyl)imide, the organic solvent of the second electrolyte includes one or more of ethyl methyl carbonate, ethylene glycol dimethyl ether, diethylene glycol dimethyl ether, and N,N-dimethylacetamide, and the polymer of the second electrolyte includes one or more of polyvinylpyrrolidone and polyethylene oxide.

In some embodiments, the sodium secondary battery is a sodium metal battery.

In the sodium metal battery, a sodium metal phase is pre-deposited on the negative electrode current collector to serve as the negative electrode. Compared to traditional negative electrode materials, the sodium metal phase as the negative electrode has a larger theoretical capacity and energy density.

In some embodiments, the sodium secondary battery is a sodium secondary battery with no negative electrode.

In the sodium secondary battery with no negative electrode, no negative electrode active material is pre-deposited, and only a negative electrode current collector is included. During the first charge, sodium ions gain electrons on the anode side and are deposited on the surface of the current collector in a form of sodium metal to form a sodium metal phase. During discharge, the sodium metal can be converted into sodium ions and returns to the positive electrode, thus achieving cyclic charge and discharge. Compared with other sodium secondary batteries and sodium metal batteries, the sodium secondary battery with no negative electrode can obtain higher energy density as it is not restricted by the negative electrode material. Moreover, the sodium secondary battery with no negative electrode maintains high cycling performance and has high forming efficiency, effectively reducing the manufacturing cost and period of the battery.

In some embodiments, a CB value of the sodium secondary battery with no negative electrode is less than or equal to 0.1.

The CB value is a unit area capacity of the negative electrode plate divided by a unit area capacity of the positive electrode plate in the secondary battery. Since there is no negative electrode active material in the battery with no negative electrode, the unit area capacity of the negative electrode plate is relatively small, and the CB value of the secondary battery is less than or equal to 0.1.

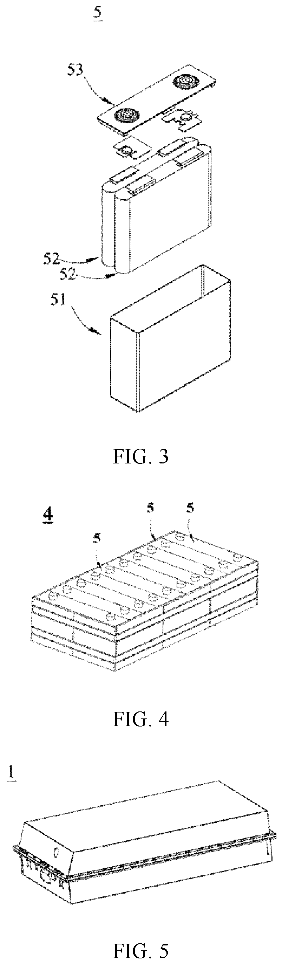

In some embodiments, referring to FIG. 3, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The non-Newtonian fluid electrolyte composition infiltrates the electrode assembly 52. There may be one or more electrode assemblies 52 in the secondary battery 5, and persons skilled in the art may make choices according to actual requirements.

### [Positive electrode plate]

In some embodiments, the positive electrode plate includes a positive electrode active material, where the positive electrode active material includes at least one of a layered transition metal oxide, a polyanion compound, and a Prussian blue compound, including one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

In some embodiments, transition metal in the layered transition metal oxide may be at least one of Mn, Fe, Ni, Co, Cr, Cu, Ti, Zn, V, Zr, and Ce. Optionally, the layered transition metal oxide is, for example, NaₓMO₂, where M is one or several of Ti, V, Mn, Co, Ni, Fe, Cr, and Cu, and 0 < x ≤ 1.

In some embodiments, the polyanionic compound can be a compound having a metal ion, a transition metal ion, and a tetrahedral (YO₄)ⁿ⁻ anion unit. The metal ion can be selected from one of sodium ion, lithium ion, potassium ion, and zinc ion; the transition metal can be selected from at least one of Mn, Fe, Ni, Co, Cr, Cu, Ti, Zn, V, Zr, and Ce; and Y can be selected from at least one of P, S, and Si; and n represents the valence state of (YO4)n⁻.

In some embodiments, the Prussian blue compound can be a compound having a sodium ion, a transition metal ion, and a cyanide ion (CN-⁻). The transition metal can be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0<a≤2, 0<b<1, and 0<c<1.

The positive electrode active materials are all beneficial to expanding the electrochemical window of the battery, enhancing the storage performance of the battery, reducing the gas generation rate of the battery, and improving the safety of the battery.

In some embodiments, a surface of the positive electrode active material has a coating layer, the coating layer includes one or more of a carbon material, ZrO₂, TiO₂, polyaniline, polypyrrole, poly(3,4-ethylenedioxythiophene), alumina, zinc oxide, titanium oxide, zirconium oxide, magnesium oxide, silicon oxide, lanthanum oxide, sodium fluoride, lithium fluoride, and aluminum fluoride, and the carbon material includes one or more of amorphous carbon, graphite, and graphene.

In this specification, the term "amorphous carbon" refers to a carbon material with a very low degree of graphitization and crystallization, approximating an amorphous form, with no specific shape and periodic structural regularity. In an example, amorphous carbon includes but is not limited to carbon black, charcoal, or coke.

In this specification, the term "graphite" refers to an allotrope of carbon, including natural graphite and synthetic graphite.

In this specification, the term "graphene" refers to a carbon material in which carbon atoms are tightly packed into a single-layer two-dimensional honeycomb lattice structure connected by sp² hybridization. In an example, graphene includes but is not limited to single-layer graphene or multi-layer graphene.

In this specification, the term "single-layer graphene" refers to a single-layer sheet structure composed of carbon atoms arranged in a hexagonal honeycomb structure periodically and closely. In an example, the single-layer graphene has a thickness of only 0.3 nm to 0.4 nm.

In this specification, the term "multi-layer graphene" refers to graphene prepared by stacking 2 to 10 layers of single-layer graphene, with a total thickness less than 100 nm.

The positive electrode active material including the coating layer is beneficial to improving the cycling performance and storage performance of the battery.

In some embodiments, a thickness of the coating layer is from 2 nm to 1000 nm, optionally from 10 nm to 100 nm.

In some embodiments, a thickness of the coating layer is optionally 2 nm, 5 nm, 10 nm, 20 nm, 30 nm, 40 nm, 50 nm, 60 nm, 70 nm, 80 nm, 90 nm, 100 nm, 200 nm, 300 nm, 400 nm, 500 nm, 600 nm, 700 nm, 800 nm, 900 nm, or 1000 nm.

Controlling the thickness of the coating layer within an appropriate range is beneficial to improving the high-voltage cycling stability and electrical performance of the battery.

The positive electrode plate may further include a conductive agent to improve the conductivity of the positive electrode. The conductive agent can optionally be one or several of Super P, acetylene black, carbon black, Ketjen black, carbon dot, carbon nanotube, graphite, graphene, and carbon nanofiber.

The positive electrode plate may further include a binder to firmly bond the positive electrode active material and optional conductive agent to a positive electrode current collector. The binder may optionally be at least one of polyvinylidene fluoride (PVDF), polytetrafluoroethylene (PTFE), polyacrylic acid (PAA), polyvinyl alcohol (PVA), ethylene vinyl acetate (EVA), styrene-butadiene rubber (SBR), carboxymethyl cellulose (CMC), sodium alginate (SA), polymethacrylic acid (PMA), and carboxymethyl chitosan (CMCS).

The positive electrode plate further includes a positive electrode current collector, and the positive electrode current collector can be a conductive carbon sheet, a metal foil, a carbon-coated metal foil, a porous metal plate, or a composite current collector. The conductive carbon material of the conductive carbon sheet can optionally be one or several of Super P, carbon black, Ketjen black, carbon dots, carbon nanotubes, graphite, graphene and carbon nanofibers. The metal materials of the metal foil, carbon-coated metal foil and porous metal plate are each independently selected from at least one of copper, aluminum, nickel and stainless steel. The composite current collector can be a composite current collector formed by combining a metal foil and a polymer base film.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

In some embodiments, the negative electrode plate includes a negative electrode current collector and a primer layer disposed on at least one surface of the negative electrode current collector, where the primer layer includes one or more of carbon nanotubes, graphite, graphene, silver composite carbon nanoparticles, and tin composite carbon nanoparticles.

The primer layer not only has excellent conductivity but also facilitates uniform deposition of metal ions on the surface of the current collector, thereby improving the cycling performance and safety of the battery.

In some embodiments, the negative electrode plate may include only a negative electrode current collector with a primer layer, without including a negative electrode active material. The negative electrode plate can alternatively have a metal phase pre-deposited on the negative electrode current collector with the primer layer.

In some embodiments, the negative electrode current collector may be a metal foil current collector or a composite current collector. For example, in a case of metal foil, an aluminum foil or a copper foil can be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, a surface density of the primer layer is 5 g/m² to 50 g/m².

The primer layer with the surface density of 5 g/m² to 50 g/m² is beneficial to uniform distribution of nucleation sites and promoting uniform deposition of metal, without affecting electron transmission behavior.

In some embodiments, the thickness of the primer layer is from 2 µm to 100 µm.

Controlling the thickness of the primer layer to 2 µm to 100 µm can provide enough nucleation sites to facilitate uniform deposition of metal ions and inhibit dendrites.

In some embodiments, the positive electrode plate, the negative electrode plate, and the separator may be made into an electrode assembly through winding or lamination.

In some embodiments, the sodium secondary battery may include an outer package. The outer package may be used for packaging the electrode assembly and the electrolyte.

In some embodiments, the outer package of the sodium secondary battery may be a hard shell, for example, a hard plastic shell, an aluminum shell, or a steel shell. The outer package of the sodium secondary battery may alternatively be a soft pack, for example, a soft pouch. A material of the soft pack may be plastic. As the plastic, polypropylene, polybutylene terephthalate, polybutylene succinate, and the like may be listed.

This application does not impose any special limitations on a shape of the sodium secondary battery, and the secondary battery may be cylindrical, rectangular, or of any other shapes. For example, FIG. 2 shows a sodium secondary battery 5 of a rectangular structure as an example.

In some embodiments, referring to FIG. 3, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The non-Newtonian fluid electrolyte composition infiltrates the electrode assembly 52. There may be one or more electrode assemblies 52 in the secondary battery 5, and persons skilled in the art may make choices according to actual requirements.

### [Battery module]

In some embodiments, the sodium secondary battery may be assembled into a battery module, and the battery module may include one or more sodium secondary batteries. The specific quantity may be chosen by persons skilled in the art according to use and capacity of the battery module.

FIG. 4 shows a battery module 4 as an example. As shown in FIG. 4, in the battery module 4, a plurality of sodium secondary batteries 5 may be sequentially arranged along a length direction of the battery module 4. Certainly, the batteries may alternatively be arranged in any other manners. Further, the plurality of sodium secondary batteries 5 may be fastened by using fasteners.

Optionally, the battery module 4 may further include a housing with accommodating space, and the plurality of sodium secondary batteries 5 are accommodated in the accommodating space.

### [Battery pack]

In some embodiments, the battery module may be further assembled into a battery pack, and the battery pack may include one or more battery modules. The specific quantity may be chosen by persons skilled in the art according to use and capacity of the battery pack.

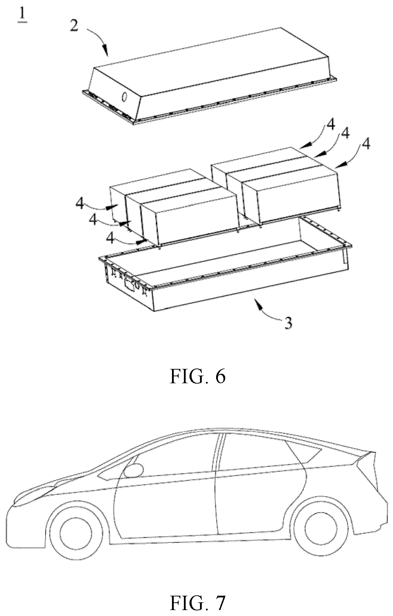

FIG. 5 and FIG. 6 show a battery pack 1 as an example. Referring to FIG. 5 and FIG. 6, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

### [Electric apparatus]

In an embodiment of this application, an electric apparatus is provided, including at least one of the sodium secondary battery of any embodiment, the battery module of any embodiment, or the battery pack of any embodiment.

The electric apparatus includes at least one of the sodium secondary battery, the battery module, or the battery pack provided in this application. The sodium secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The sodium secondary battery, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the sodium secondary battery, a battery pack or a battery module may be used.

In another example, the apparatus may be a mobile phone, a tablet computer, a notebook computer, or the like. Such apparatus is generally required to be light and thin and may use a sodium secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### I. Preparation method

### Example 1

### (1) Preparation of electrolyte

Under a dry argon atmosphere, solvents ethylene carbonate (EC), propylene carbonate (PC), and dimethyl carbonate (DMC) were mixed at a volume ratio of 1:1:1, and sodium perchlorate (NaClO₄) was added. These substances were stirred to uniformity to allow sodium perchlorate to completely dissolve, to obtain a first electrolyte. The concentration of sodium perchlorate was 1 mol/L based on the total volume of the first electrolyte.

Under a dry argon atmosphere, sodium hexafluorophosphate and a solvent ethylene glycol dimethyl ether (DME) were mixed and stirred to uniformity to allow sodium hexafluorophosphate to completely dissolve, to obtain a second electrolyte. The concentration of sodium hexafluorophosphate was 1 mol/L based on the total volume of the second electrolyte.

A mass ratio of the first electrolyte to the second electrolyte was 1: 1.

### (2) Preparation of positive electrode plate

A binder 2.5wt% polyvinylidene fluoride was sufficiently dissolved in N-methylpyrrolidone (NMP), and then 2.0wt% Super P, 1.0wt% carbon nanotubes, and 94.5wt% Na₄Fe₃(PO₄)₂P₂O₇ positive electrode active material were added. These substances were mixed and stirred to uniformity to obtain a positive electrode slurry. The slurry was applied uniformly onto a surface of an aluminum foil current collector, and then the collector was transferred to a vacuum drying oven to dry it completely. Roll pressing and punching were performed on the dried electrode plate to obtain a positive electrode plate.

### (3) Preparation of negative electrode plate

Carbon nanotubes and carboxymethyl cellulose (CMC) were added to deionized water at a mass ratio of 1:0.4, and stirred to form a uniform slurry. The slurry was applied onto a surface of a copper foil negative electrode current collector to form a primer layer, and then the collector was transferred to a vacuum drying oven to dry it completely. Punching was performed then in a way that the primer layer had a thickness of 20 µm and a surface density of 25 g/m², to obtain a negative electrode plate with no negative electrode structure.

### (4) Separator

A sodium super ionic conductor Na_{3.4}Zr_{1.9}Zn_{0.1}Si_{2.2}P_{0.8}O₁₂ was used as a separator.

### (5) Preparation of battery

The positive electrode plate, the negative electrode plate, and the separator were assembled into a double-chamber battery. A first electrolyte was added to a chamber between the positive electrode plate and the separator, and a second electrolyte was added to a chamber between the negative electrode plate and the separator, to obtain an uncharged battery. The uncharged battery then underwent processes such as standing, formation, and capacity testing in sequence, to obtain a sodium secondary battery with no negative electrode of Example 1.

### Examples 2 to 15

In Examples 2 to 15, double-chamber batteries were still used, and preparation methods were basically the same as that in Example 1, with the types and compositions of materials being different to some extent. In Examples 8, 10, and 15, the thickness of the coating layer of the positive electrode active material was 30 nm. The specific materials are shown in Table 1 and Table 2.

### Example 16

### (1) Preparation of electrolyte

Under a dry argon atmosphere, sodium bis(trifluoromethanesulfonyl)imide (NaTFSI) and a solvent dimethyl sulfoxide (DMSO) were mixed and stirred to uniformity to allow sodium bis(trifluoromethanesulfonyl)imide to completely dissolve, so as to obtain a first electrolyte. The concentration of sodium bis(trifluoromethanesulfonyl)imide was 1 mol/L based on a total volume of the first electrolyte.

Under a dry argon atmosphere, sodium hexafluorophosphate (NaPF₆) and a solvent ethylene glycol dimethyl ether (G2) were mixed and stirred to uniformity to allow sodium hexafluorophosphate to completely dissolve, to obtain a second electrolyte. The concentration of sodium hexafluorophosphate was 1 mol/L based on the total volume of the second electrolyte.

A mass ratio of the first electrolyte to the second electrolyte was 1: 1.

### (2) Preparation of positive electrode plate

A binder 2.5wt% polyvinylidene fluoride was sufficiently dissolved in N-methylpyrrolidone (NMP), and then 2.0wt% Super P, 1.0wt% carbon nanotubes, and 94.5wt% Na₄Fe₃(PO₄)₂P₂O₇ positive electrode active material were added. These substances were mixed and stirred to uniformity to obtain a positive electrode slurry. The slurry was applied uniformly onto a surface of an aluminum foil current collector, and then the collector was transferred to a vacuum drying oven to dry it completely. Roll pressing and punching were performed on the dried electrode plate to obtain a positive electrode plate.

### (3) Preparation of negative electrode plate

Carbon nanotubes and carboxymethyl cellulose (CMC) were added to deionized water at a mass ratio of 1:0.4, and stirred to form a uniform slurry. The slurry was applied onto a surface of a copper foil negative electrode current collector, and then the collector was transferred to a vacuum drying oven to dry it completely. Punching was performed then to obtain a negative electrode plate with no negative electrode structure. The primer layer had a thickness of 20 µm and a surface density of 25 g/m².

### (4) Separator

Polyethylene film and glass fiber film

### (5) Preparation of battery

The positive electrode plate, the polyethylene film, the glass fiber film, and the negative electrode plate were stacked in sequence, and then wound to obtain a jelly roll. Tabs were welded to the jelly roll and the jelly roll was placed into an aluminum shell. The shell was heated to 80°C to remove moisture, then 4 µL/mAh first electrolyte was added on the polyethylene film dropwise, 6 µL/mAh second electrolyte was added on the glass fiber dropwise, and sealing was performed to obtain an uncharged battery. The uncharged battery then underwent processes such as standing, hot and cold pressing, formation, shaping, and capacity testing in sequence, to obtain a sodium secondary battery with no negative electrode of Example 16.

### Examples 17 to 19

Preparation methods of Examples 17 to 19 were similar to that of Example 16, and the thickness of the coating layer of the positive electrode active material in Example 19 was 30 nm. The specific materials are shown in Table 1 and Table 2.

### Example 20

### (1) Preparation of electrolyte

Under a dry argon atmosphere, sodium hexafluorophosphate, a solvent ethyl methyl carbonate (EMC), and a polyvinylidene fluoride polymer were mixed and stirred to uniformity to allow sodium hexafluorophosphate to completely dissolve, to obtain a first electrolyte. The concentration of sodium hexafluorophosphate was 1 mol/L based on the total volume of the first electrolyte. The mass percentage of polyvinylidene fluoride was 10% based on the total mass of the first electrolyte. The viscosity of the first electrolyte was 906 mPa·s.

Under a dry argon atmosphere, sodium hexafluorophosphate, a solvent ethylene glycol dimethyl ether (DME), and polyethylene oxide polymer were mixed and stirred to uniformity to allow sodium hexafluorophosphate to completely dissolve, to obtain a second electrolyte. The concentration of sodium hexafluorophosphate was 1 mol/L based on the total volume of the second electrolyte. The mass percentage of polyethylene oxide was 20% based on the total mass of the second electrolyte. The viscosity of the second electrolyte was 538 mPa·s.

### (2) Preparation of positive electrode plate

A binder 2.5wt% polyvinylidene fluoride was sufficiently dissolved in N-methylpyrrolidone (NMP), and then 2.0wt% Super P, 1.0wt% carbon nanotubes, and 94.5wt% Na₄Fe₃(PO₄)₂P₂O₇ positive electrode active material were added. These substances were mixed and stirred to uniformity to obtain a positive electrode slurry. The slurry was applied uniformly onto a surface of an aluminum foil current collector, and then the collector was transferred to a vacuum drying oven to dry it completely. Roll pressing and punching were performed on the dried electrode plate to obtain a positive electrode plate.

### (3) Preparation of negative electrode plate

Carbon nanotubes and carboxymethyl cellulose (CMC) were added to deionized water at a mass ratio of 1:0.4, and stirred to form a uniform slurry. The slurry was applied onto a surface of a copper foil negative electrode current collector, and then the collector was transferred to a vacuum drying oven to dry it completely. Punching was performed then to obtain a negative electrode plate with no negative electrode structure. The primer layer had a thickness of 20 µm and a surface density of 25 g/m².

### (4) Separator

### Polyethylene film

### (5) Preparation of battery

The first electrolyte and the second electrolyte were cast onto two sides of the separator respectively, and then the positive electrode plate, the first electrolyte, the separator, the second electrolyte, and the negative electrode plate were stacked in sequence so that the separator coated with the electrolyte was located between the positive and negative electrode plates for separation, and wound to obtain a jelly roll. Tabs were welded to the jelly roll and the jelly roll was placed into an aluminum shell. The shell was heated to 80°C to remove moisture to obtain an uncharged battery. The uncharged battery then underwent processes such as standing, hot and cold pressing, formation, shaping, and capacity testing in sequence, to obtain a sodium secondary battery with no negative electrode of Example 1.

### Examples 21 and 22

Preparation methods of Examples 21 and 22 were similar to that of Example 20, with the type of the positive electrode active material adjusted, and the thickness of the coating layer of the positive electrode active material in Example 22 was 30 nm. The specific materials are shown in Table 1 and Table 2.

### Example 23

### (1) Preparation of electrolyte

Under a dry argon atmosphere, sodium hexafluorophosphate, a solvent 2-(2-ethoxyethoxy)-1,1,1-trifluoroethane (F3DEE), a polyvinylidene fluoride polymer, and a perfluoropolyether polymer were mixed and stirred to uniformity to allow sodium hexafluorophosphate to completely dissolve, to obtain a first electrolyte. The concentration of sodium hexafluorophosphate was 1 mol/L based on the total volume of the first electrolyte. The mass percentage of polyvinylidene fluoride was 10%, and the mass percentage of perfluoropolyether was 10%, based on the total mass of the first electrolyte. The viscosity of the first electrolyte was 1087 mPa·s.

Under a dry argon atmosphere, sodium hexafluorophosphate, a solvent N,N-dimethylacetamide (DMA), and a polyvinylpyrrolidone polymer were mixed and stirred to uniformity to allow sodium hexafluorophosphate to completely dissolve, to obtain a second electrolyte. The concentration of sodium hexafluorophosphate was 1 mol/L based on the total volume of the second electrolyte. The mass percentage of polyethylene oxide was 10% based on the total mass of the second electrolyte. The viscosity of the first electrolyte was 675 mPa·s.

### (2) Preparation of positive electrode plate

A binder 2.5wt% polyvinylidene fluoride was sufficiently dissolved in N-methylpyrrolidone (NMP), and then 2.0wt% Super P, 1.0wt% carbon nanotubes, and 94.5wt% Na₄Fe₃(PO₄)₂P₂O₇ positive electrode active material were added. These substances were mixed and stirred to uniformity to obtain a positive electrode slurry. The slurry was applied uniformly onto a surface of an aluminum foil current collector, and then the collector was transferred to a vacuum drying oven to dry it completely. Roll pressing and punching were performed on the dried electrode plate to obtain a positive electrode plate.

### (3) Preparation of negative electrode plate

Carbon nanotubes and carboxymethyl cellulose (CMC) were added to deionized water at a mass ratio of 1:0.4, and stirred to form a uniform slurry. The slurry was applied onto a surface of a copper foil negative electrode current collector, and then the collector was transferred to a vacuum drying oven to dry it completely. Punching was performed then to obtain a negative electrode plate with no negative electrode structure. The primer layer had a thickness of 20 µm and a surface density of 25 g/m².

### (4) Separator

### Polyethylene film

### (5) Preparation of battery

The first electrolyte and the second electrolyte were cast onto two sides of the separator respectively, and then the positive electrode plate, the first electrolyte, the separator, the second electrolyte, and the negative electrode plate were stacked in sequence so that the separator coated with the electrolyte was located between the positive and negative electrode plates for separation, and wound to obtain a jelly roll. Tabs were welded to the jelly roll and the jelly roll was placed into an aluminum shell. The shell was heated to 80°C to remove moisture to obtain an uncharged battery. The uncharged battery then underwent processes such as standing, hot and cold pressing, formation, shaping, and capacity testing in sequence, to obtain a sodium secondary battery with no negative electrode of Example 1.

### Examples 24 and 25

Preparation methods of Examples 24 and 25 were similar to that of Example 23, with the type of the positive electrode active material adjusted, and the thickness of the coating layer of the positive electrode active material in Example 25 was 30 nm. The specific materials are shown in Table 1 and Table 2.

### Comparative Example 1

### (1) Preparation of electrolyte

Under a dry argon atmosphere, solvents ethylene carbonate (EC), propylene carbonate (PC), and dimethyl carbonate (DMC) were mixed at a volume ratio of 1:1:1, and sodium perchlorate (NaClO₄) was added. These substances were stirred to uniformity to allow sodium perchlorate to completely dissolve. The concentration of sodium perchlorate was 1 mol/L based on the total volume of the electrolyte.

### (2) Preparation of positive electrode plate

A binder 2.5wt% polyvinylidene fluoride was sufficiently dissolved in N-methylpyrrolidone (NMP), and then 2.0wt% Super P, 1.0wt% carbon nanotubes, and 94.5wt% Na₄Fe₃(PO₄)₂P₂O₇ positive electrode active material were added. These substances were mixed and stirred to uniformity to obtain a positive electrode slurry. The slurry was applied uniformly onto a surface of an aluminum foil current collector, and then the collector was transferred to a vacuum drying oven to dry it completely. Roll pressing and punching were performed on the dried electrode plate to obtain a positive electrode plate.

### (3) Preparation of negative electrode plate

Carbon nanotubes and carboxymethyl cellulose (CMC) were added to deionized water at a mass ratio of 1:0.4, and stirred to form a uniform slurry. The slurry was applied onto a surface of a copper foil negative electrode current collector, and then the collector was transferred to a vacuum drying oven to dry it completely. Punching was performed then to obtain a negative electrode plate with no negative electrode structure. The primer layer had a thickness of 20 µm and a surface density of 25 g/m².

### (4) Separator

### Polyethylene film

### (5) Preparation of battery

The positive electrode plate, the polyethylene film, and the negative electrode plate were stacked in sequence, and then wound to obtain a jelly roll. Tabs were welded to the jelly roll and the jelly roll was placed into an aluminum shell. The shell was heated to 80°C to remove moisture, then the electrolyte solution was injected, and sealing was performed to obtain an uncharged battery. The uncharged battery then underwent processes such as standing, hot and cold pressing, formation, shaping, and capacity testing in sequence, to obtain a sodium secondary battery with no negative electrode of Comparative Example 1.

### Comparative Examples 2 to 15

Preparation methods of Comparative Examples 2 to 15 were basically the same as that of Comparative Example 1. The specific materials are shown in Table 1 and Table 2.

### II. Performance test

### 1. Test for adding volume per unit capacity of first electrolyte and second electrolyte

The volume was calculated by dividing the adding volume of the first electrolyte or the second electrolyte by the capacity of the corresponding battery.

The capacity of the corresponding battery was obtained through performing grading on batteries with the same load and the same type of positive electrode active material and negative electrode active material as those in the corresponding example.

### 2. Battery performance test

### (1) Coulombic efficiency test

The process of the Coulombic efficiency test is as follows: At 25°C, the prepared battery was charged at a constant current of 0.1C rate to 3.7 V (for sodium iron pyrophosphate positive electrode) or 4.0 V (for layered oxide positive electrode) to obtain the charge capacity of the first cycle (Cc1), and then discharged at a constant current of 0.1C rate to 2.5 V to obtain the discharge capacity of the first cycle (Cd1). N cycles of charge and discharge were performed, and the number of cycles when the capacity decayed to 80% was recorded. The average Coulombic efficiency of the battery was calculated according to the following formula: Coulombic efficiency of first cycle = discharge capacity of first cycle (Cd1)/charge capacity of first cycle (Cc1) × 100% Coulombic efficiency of n-th cycle = discharge capacity of n-th cycle (Cdn)/charge capacity of n-th cycle (Ccn) × 100%

The average Coulombic efficiency from the second cycle to the n-th cycle was taken as the average Coulombic efficiency of the battery.

The test processes of the comparative examples and other examples were the same as above.

### (2) Cycling performance test

The process of the cycling performance test is as follows: At 25°C, the prepared battery was charged at a constant current of 1C rate to 3.7 V (for sodium iron pyrophosphate positive electrode) or 4.0 V (for layered oxide positive electrode), and then discharge at 1C to 2.5 V. The obtained capacity was recorded as the initial capacity (C0). The above steps were repeated for the same battery, and the discharge capacity after the n-th cycle (Cn) of the battery was recorded. The capacity retention rate after each cycle Pn of the battery=Cn/C0×100%, and the number of cycles of the battery when Pn dropped to 80% was recorded. The test processes of the comparative examples and other examples were the same as above.

### (3) Electrochemical window test

The process of the electrochemical window test is as follows: An electrochemical workstation was used to perform a window test of the electrolyte solution, with the test temperature being 25°C, the voltage range being 1.0 V to 5.2 V, and the scanning speed being 0.1 mV/s. A window used by the electrolyte solution was determined based on a starting position of a peak potential in a CV curve. The cyclic voltammetry (CV) tests in this experiment were all completed on a 1470 multi-channel electrochemical workstation from Solartron of the UK. The test processes of the comparative examples and other examples were the same as above.

### (4) Test for cycling gas generation performance

At 25°C, the prepared full battery was left standing for 4 hours. Then, the battery was charged at a constant current of 0.1C rate to 4/3.7 V, and charged at a constant voltage of 4/3.7 V to 0.01C. The battery was left standing for 5 minutes, and the thickness of the full battery was measured. After storage at 25°C for 60 days, the thickness of the full battery was measured. The thickness swelling rate of the battery was calculated using the following formula: thickness swelling rate of full battery=[(thickness after storage-thickness before storage)/thickness before storage]×100%. The storage swelling rate at 25°C is marked by "/", which means that the double-chamber structured battery is a rigid structure, and the thickness swelling rate of the full battery cannot be tested. The test processes of the comparative examples and other examples were the same as above.

### (5). Storage performance at room temperature/high temperature

At 25°C, the prepared full battery was left standing for 4 hours, and then the battery was charged at a constant current of 0.1C rate to 4/3.7 V, and then charged at a constant voltage of 4/3.7 V until the current dropped to 0.01C rate. Through this step, the battery was charged to 100% SOC. The battery was placed in a constant temperature environment of 25/60°C for storage, and the number of storage days corresponding to an 80% storage capacity retention rate of the battery was recorded.

### III. Analysis of test results of examples and comparative examples

Batteries in examples and comparative examples were prepared according to the foregoing methods respectively, and performance parameters were measured. Results are shown in Tables 1, 2, and 3.

**Table 1**

| No. | First electrolyte | | | | Second electrolyte | | | |
|---|---|---|---|---|---|---|---|---|
| | Sodium salt | Solvent (volume ratio of components in solvent) | Polymer (mass ratio of components in polymer) | Mass percentage of polymer (%) | Sodium salt | Solvent | Polymer | Mass percentage of polymer (%) |
| Example 1 | Sodium perchlorate | EC+PC+DMC (1:1:1) | / | / | Sodium hexafluorophosphate | G2 | / | / |
| Example 2 | Sodium perchlorate | EC+PC+DMC (1:1:1) | / | / | Sodium hexafluorophosphate | DME | / | / |
| Example 3 | Sodium hexafluorophosphate | EMC | / | / | Sodium hexafluorophosphate | DME | / | / |
| Example 4 | Sodium bis(fluorosulfonyl)imide | F3DEE | / | / | Sodium hexafluorophosphate | 15-crown-5 | / | / |
| Example 5 | Sodium hexafluorophosphate | EMC | / | / | Sodium hexafluorophosphate | 15-crown-5 | / | / |
| Example 6 | Sodium bis(fluorosulfonyl)imide | F3DEE | / | / | Sodium bis(fluorosulfonyl)imi de | DME | / | / |
| Example 7 | Sodium hexafluorophosphate | EMC | / | / | Sodium hexafluorophosphate | 15-crown-5 | / | / |
| Example 8 | Sodium hexafluorophosphate | EMC | / | / | Sodium hexafluorophosphate | 15-crown-5 | / | / |
| Example 9 | Sodium perchlorate | EC+PC+DMC (1:1:1) | / | / | Sodium hexafluorophosphate | DME | / | / |
| Example 10 | Sodium perchlorate | EC+PC+DMC (1:1:1) | / | / | Sodium hexafluorophosphate | DME | / | / |
| Example 11 | Sodium hexafluorophosphate | DEC+EMC | / | / | Sodium hexafluorophosphate | G2 | / | / |
| Example 12 | Sodium hexafluorophosphate | DEC+EMC | / | / | Sodium hexafluorophosphate | DME | / | / |
| Example 13 | Sodium hexafluorophosphate | DEC+EMC | / | / | Sodium hexafluorophosphate | 15-crown-5 | / | / |
| Example 14 | Sodium hexafluorophosphate | DEC+EMC | / | / | Sodium hexafluorophosphate | DME | / | / |
| Example 15 | Sodium hexafluorophosphate | DEC+EMC | / | / | Sodium hexafluorophosphate | DME | / | / |
| Example 16 | Sodium bis(trifluoromethane-sulfonyl)imide | DMSO | / | / | Sodium hexafluorophosphate | G2 | / | / |
| Example 17 | Sodium bis(trifluoromethane-sulfonyl)imide | DMSO | / | / | Sodium hexafluorophosphate | DME | / | / |
| Example 18 | Sodium bis(trifluoromethane-sulfonyl)imide | DMSO | / | / | Sodium hexafluorophosphate | G2 | / | / |
| Example 19 | Sodium bis(trifluoromethane-sulfonyl)imide | DMSO | / | / | Sodium hexafluorophosphate | G2 | / | / |
| Example 20 | Sodium hexafluorophosphate | EMC | Polyvinylidene fluoride | 10 | Sodium hexafluorophosphate | DME | Polyethylene oxide | 20 |
| Example 21 | Sodium hexafluorophosphate | EMC | Polyvinylidene fluoride | 10 | Sodium hexafluorophosphate | DME | Polyethylene oxide | 20 |
| Example 22 | Sodium hexafluorophosphate | EMC | Polyvinylidene fluoride | 10 | Sodium hexafluorophosphate | DME | Polyethylene oxide | 20 |
| Example 23 | Sodium hexafluorophosphate | F3DEE | Polyethylene oxide + perfluoropolyether (1:1) | 20 | Sodium hexafluorophosphate | DMA | Polyvinylpyrro -lidone | 10 |
| Example 24 | Sodium hexafluorophosphate | F3DEE | Polyethylene oxide + perfluoropolyether (1:1) | 20 | Sodium hexafluorophosphate | DMA | Polyvinylpyrro -lidone | 10 |
| Example 25 | Sodium hexafluorophosphate | F3DEE | Polyethylene oxide + perfluoropolyether (1:1) | 20 | Sodium hexafluorophosphate | DMA | Polyvinylpyrro -lidone | 10 |
| Comparative Example 1 | Sodium perchlorate | EC+PC+DMC (1:1:1) | / | / | / | / | / | / |
| Comparative Example 2 | Sodium perchlorate | EC+PC+DMC (1:1:1) | / | / | / | / | / | / |
| Comparative Example 3 | Sodium perchlorate | EC+PC+DMC (1:1:1) | / | / | / | / | / | / |
| Comparative Example 4 | Sodium hexafluorophosphate | G2 | / | / | / | / | / | / |
| Comparative Example 5 | Sodium hexafluorophosphate | G2 | / | / | / | / | / | / |
| Comparative Example 6 | Sodium hexafluorophosphate | G2 | / | / | / | / | / | / |
| Comparative Example 7 | Sodium hexafluorophosphate | EMC | / | / | / | / | / | / |
| Comparative Example 8 | Sodium hexafluorophosphate | DME | / | / | / | / | / | / |
| Comparative Example 9 | Sodium hexafluorophosphate | DME | / | / | / | / | / | / |
| Comparative Example 10 | Sodium bis(fluorosulfonyl)imide | F3DEE | / | / | / | / | / | / |
| Comparative Example 11 | Sodium hexafluorophosphate | 15-crown-5 | / | / | / | / | / | / |
| Comparative Example 12 | Sodium bis(trifluoromethane-sulfonyl)imide | DMSO | / | / | / | / | / | / |
| Comparative Example 13 | Sodium bis(trifluoromethane-sulfonyl)imide | DMSO | / | / | / | / | / | / |
| Comparative Example 14 | Sodium hexafluorophosphate | EMC | Polyvinylidene fluoride | 10 | / | / | / | / |
| Comparative Example 15 | Sodium hexafluorophosphate | DME | Polyethylene oxide | 20 | / | / | / | / |
| Comparative Example 16 | Sodium hexafluorophosphate | DME | Polyethylene oxide | 20 | / | / | / | / |
| Comparative Example 17 | Sodium hexafluorophosphate | F3DEE | Polyethylene oxide+perfluor opolye-ther (1:1) | 20 | / | / | / | / |
| Comparative Example 18 | Sodium hexafluorophosphate | DMA | Polyvinylpyrrolidone | 10 | / | / | / | / |

| | | | | | | | | |
|---|---|---|---|---|---|---|---|---|
| Note: "/" in Table 1 indicates the absence of the corresponding substance and corresponding mass percentage. | | | | | | | | |

**Table 2**

| No. | Separator | | Positive electrode active material |
|---|---|---|---|
| | Substance | Adding volume per unit capacity | |
| Example 1 | Na_{3.4}Zr_{1.9}Zn_{0.1}Si_{2.2}P_{0.8}O₁₂ | / | Na₄Fe₃(PO₄)₂P₂O₇ |
| Example 2 | Na_{3.4}Zr_{1.9}Zn_{0.1}Si_{2.2}P_{0.8}O₁₂ | / | Na₄Fe₃(PO₄)₂P₂O₇ |
| Example 3 | Perfluorosulfonic acid resin film after sodium ion exchange-Nafion | / | Na₄Fe₃(PO₄)₂P₂O₇ |
| Example 4 | Perfluorosulfonic acid resin film after sodium ion exchange-Nafion | / | Na₄Fe₃(PO₄)₂P₂O₇ |
| Example 5 | Perfluorosulfonic acid resin film after sodium ion exchange-Nafion | / | Na₄Fe₃(PO₄)₂P₂O₇ |
| Example 6 | Perfluorosulfonic acid resin film after sodium ion exchange-Nafion | / | Na₄Fe₃(PO₄)₂P₂O₇ |
| Example 7 | Perfluorosulfonic acid resin film after sodium ion exchange-Nafion | / | Na[Cu_{1/9}Ni_{2/9}Fe_{1/3}Mn_{1/3}] O₂ |
| Example 8 | Perfluorosulfonic acid resin film after sodium ion exchange-Nafion | / | ZrO₂-coated Na_{2/3}Ni_{1/6}Mn_{2/3}Cu_{1/9}Mg_{1/ 18}O₂ |
| Example 9 | Na_{3.4}Zr_{1.9}Zn_{0.1}Si_{2.2}P_{0.8}O₁₂ | / | Na[Cu_{1/9}Ni_{2/9}Fe_{1/3}Mn_{1/3}] O₂ |
| Example 10 | Na_{3.4}Zr_{1.9}Zn_{0.1}Si_{2.2}P_{0.8}O₁₂ | / | ZrO₂-coated Na_{2/3}Ni_{1/6}Mn_{2/3}Cu_{1/9}Mg_{1/ 18}O₂ |
| Example 11 | β-Na₂O 11Al₂O₃ | / | Na₄Fe₃(PO₄)₂P₂O₇ |
| Example 12 | β-Na₂O 11Al₂O₃ | / | Na₄Fe₃(PO₄)₂P₂O₇ |
| Example 13 | β-Na₂O 11Al₂O₃ | / | Na₄Fe₃(PO₄)₂P₂O₇ |
| Example 14 | β-Na₂O 11Al₂O₃ | / | Na[Cu_{1/9}Ni_{2/9}Fe_{1/3}Mn_{1/3}] O₂ |
| Example 15 | β-Na₂O 11Al₂O₃ | / | ZrO₂-coated Na_{2/3}Ni_{1/6}Mn_{2/3}Cu_{1/9}Mg_{1/ 18}O₂ |
| Example 16 | Polyethylene film+glass fiber film | 4µL/mAh first electrolyte+6µL/ mAh second electrolyte | Na₄Fe₃(PO₄)₂P₂O₇ |
| Example 17 | Polyethylene film+glass fiber film | 4µL/mAh first electrolyte+6µL/ mAh second electrolyte | Na₄Fe₃(PO₄)₂P₂O₇ |
| Example 18 | Polyethylene film+glass fiber film | 4µL/mAh first electrolyte+6µL/ mAh second electrolyte | Na[Cu_{1/9}Ni_{2/9}Fe_{1/3}Mn_{1/3}] O₂ |
| Example 19 | Polyethylene film+glass fiber film | 4µL/mAh first electrolyte+6µL/ mAh second electrolyte | ZrO₂-coated Na_{2/3}Ni_{1/6}Mn_{2/3}Cu_{1/9}Mg_{1/ 18}O₂ |
| Example 20 | Polyethylene | / | Na₄Fe₃(PO₄)₂P₂O₇ |
| Example 21 | Polyethylene | / | Na[Cu_{1/9}Ni_{2/9}Fe_{1/3}Mn_{1/3}] O₂ |
| Example 22 | Polyethylene | / | ZrO2-coated Na_{2/3}Ni_{1/6}Mn_{2/3}Cu_{1/9}Mg_{1/} 1802 |
| Example 23 | Polyethylene | / | Na₄Fe₃(PO₄)₂P₂O₇ |
| Example 24 | Polyethylene | / | Na[Cu_{1/9}Ni_{2/9}Fe_{1/3}Mn_{1/3}] O₂ |
| Example 25 | Polyethylene | / | ZrO₂-coated Na_{2/3}Ni_{1/6}Mn_{2/3}Cu_{1/9}Mg_{1/} 1802 |
| Comparative Example 1 | Polyethylene | / | Na₄Fe₃(PO₄)₂P₂O₇ |
| Comparative Example 2 | Polyethylene | / | Na[Cu_{1/9}Ni_{2/9}Fe_{1/3}Mn_{1/3}] O₂ |
| Comparative Example 3 | Polyethylene | / | ZrO₂-coated Na_{2/3}Ni_{1/6}Mn_{2/3}Cu_{1/9}Mg_{1/ 18}O₂ |
| Comparative Example 4 | Polyethylene | / | Na₄Fe₃(PO₄)₂P₂O₇ |
| Comparative Example 5 | Polyethylene | / | Na[Cu_{1/9}Ni_{2/9}Fe_{1/3}Mn_{1/3}] O₂ |
| Comparative Example 6 | Polyethylene | / | ZrO₂-coated Na_{2/3}Ni_{1/6}Mn_{2/3}Cu_{1/9}Mg_{1/ 18}O₂ |
| Comparative Example 7 | Polyethylene | / | Na₄Fe₃(PO₄)₂P₂O₇ |
| Comparative Example 8 | Polyethylene | / | Na₄Fe₃(PO₄)₂P₂O₇ |
| Comparative Example 9 | Polyethylene | / | Na[Cu_{1/9}Ni_{2/9}Fe_{1/3}Mn_{1/3}] O₂ |
| Comparative Example 10 | Polyethylene | / | Na₄Fe₃(PO₄)₂P₂O₇ |
| Comparative Example 11 | Polyethylene | / | Na₄Fe₃(PO₄)₂P₂O₇ |
| Comparative Example 12 | Polyethylene | / | Na₄Fe₃(PO₄)₂P₂O₇ |
| Comparative Example 13 | Polyethylene | / | Na[Cu_{1/9}Ni_{2/9}Fe_{1/3}Mn_{1/3}] O₂ |
| Comparative Example 14 | Polyethylene | / | Na₄Fe₃(PO₄)₂P₂O₇ |
| Comparative Example 15 | Polyethylene | / | Na₄Fe₃(PO₄)₂P₂O₇ |
| Comparative Example 16 | Polyethylene | / | Na[Cu_{1/9}Ni_{2/9}Fe_{1/3}Mn_{1/3}] O₂ |
| Comparative Example 17 | Polyethylene | / | Na₄Fe₃(PO₄)₂P₂O₇ |
| Comparative Example 18 | Polyethylene | / | Na₄Fe₃(PO₄)₂P₂O₇ |

**Table 3**

| No. | Electrochemical stability window width (V) | Average cycling coulombic efficiency at 25°C (%) | Number of cycles corresponding to 80% capacity retention rate at 25°C (cycles) | Storage swelling rate at 25°C (%) | Number of storage days corresponding to 80% storage capacity retention rate at 25°C (days) |
|---|---|---|---|---|---|
| Example 1 | 4.8 | 99.7 | 1850 | / | 243 |
| Example 2 | 4.9 | 99.9 | 2300 | / | 269 |
| Example 3 | 4.8 | 99.6 | 1200 | / | 84 |
| Example 4 | 4.9 | 99.6 | 1350 | / | 128 |
| Example 5 | 5.0 | 99.9 | 1750 | / | 161 |
| Example 6 | 4.7 | 99.5 | 1050 | / | 72 |
| Example 7 | 5.0 | 99.3 | 650 | / | 45 |
| Example 8 | 5.0 | 99.5 | 750 | / | 52 |
| Example 9 | 4.9 | 99.5 | 700 | / | 70 |
| Example 10 | 4.9 | 99.8 | 850 | / | 83 |
| Example 11 | 4.8 | 99.8 | 2250 | / | 287 |
| Example 12 | 4.9 | 99.9 | 3000 | / | 310 |
| Example 13 | 5.0 | 99.9 | 2700 | / | 295 |
| Example 14 | 4.9 | 99.9 | 950 | / | 89 |
| Example 15 | 4.9 | 99.9 | 1050 | / | 101 |
| Example 16 | 4.9 | 99.7 | 1500 | 14 | 132 |
| Example 17 | 5.0 | 99.5 | 1050 | 18 | 108 |
| Example 18 | 5.0 | 99.2 | 400 | 26 | 28 |
| Example 19 | 4.9 | 99.3 | 550 | 22 | 33 |
| Example 20 | 4.9 | 99.8 | 1650 | 13 | 152 |
| Example 21 | 4.9 | 99.6 | 700 | 21 | 60 |
| Example 22 | 4.9 | 99.8 | 800 | 19 | 71 |
| Example 23 | 4.7 | 99.6 | 1100 | 18 | 77 |
| Example 24 | 4.7 | 99.3 | 600 | 26 | 39 |
| Example 25 | 4.7 | 99.5 | 750 | 24 | 50 |
| Comparative Example 1 | 4.3 | 98.8 | 500 | 31 | 20 |
| Comparative Example 2 | 4.3 | 98.0 | 150 | 42 | 9 |
| Comparative Example 3 | 4.3 | 98.3 | 200 | 36 | 13 |
| Comparative Example 4 | 4.0 | 99.6 | 1450 | 18 | 72 |
| Comparative Example 5 | 4.0 | 98.6 | 200 | 32 | 16 |
| Comparative Example 6 | 4.0 | 98.9 | 350 | 28 | 27 |
| Comparative Example 7 | 4.2 | 98.9 | 500 | 29 | 22 |
| Comparative Example 8 | 3.9 | 99.8 | 1500 | 26 | 64 |
| Comparative Example 9 | 3.9 | 98.2 | 100 | 36 | 48 |
| Comparative Example 10 | 4.2 | 98.7 | 400 | 34 | 18 |
| Comparative Example 11 | 4.1 | 99.6 | 1150 | 23 | 60 |
| Comparative Example 12 | 4.4 | 98.5 | 200 | 34 | 13 |
| Comparative Example 13 | 4.4 | 98.3 | 100 | 41 | 69 |
| Comparative Example 14 | 4.2 | 99.0 | 600 | 27 | 25 |
| Comparative Example 15 | 4.0 | 99.9 | 1550 | 23 | 68 |
| Comparative Example 16 | 4.0 | 98.5 | 150 | 32 | 41 |
| Comparative Example 17 | 4.3 | 99.0 | 500 | 32 | 31 |
| Comparative Example 18 | 4.1 | 99.2 | 700 | 26 | 38 |

| | | | | | |
|---|---|---|---|---|---|
| Note: "/" in Table 3 indicates that the double-chamber battery is a rigid structure battery, and the thickness swelling rate of the full battery cannot be tested. | | | | | |

It can be seen from the results above that each of the sodium secondary batteries of Examples 1 to 25 includes a positive electrode plate, a negative electrode plate, a first electrolyte located on the side of the positive electrode plate, and a second electrolyte located on the side of the negative electrode plate, and the first electrolyte and the second electrolyte contain different organic solvents. The first electrolyte includes at least one of an ester solvent, a sulfone solvent, and a fluoroether solvent, and the second electrolyte includes at least one of an ether solvent and an amide solvent.

It can be seen from the comparison between Example 1 with Comparative Examples 1 and 4; Example 2 with Comparative Examples 1 and 8; Example 3 with Comparative Examples 7 and 8; Example 4 with Comparative Examples 10 and 11; Example 5 with Comparative Examples 7 and 11; Example 6 with Comparative Example 10; Example 9 with Comparative Examples 2 and 9; Example 10 with Comparative Example 3; Example 11 with Comparative Example 4; Example 12 with Comparative Example 8; Example 13 with Comparative Example 11; Example 14 with Comparative Example 9; Example 16 with Comparative Examples 4 and 12; Example 17 with Comparative Examples 8 and 12; Example 18 with Comparative Examples 5 and 13; Example 19 with Comparative Example 6; Example 20 with Comparative Examples 14 and 15; Example 21 with Comparative Example 16; and Example 23 with Comparative Examples 17 and 18 that compared with the sodium secondary batteries that contain only a single-phase electrolyte in the prior art, the sodium secondary battery that includes the first electrolyte and the second electrolyte in this application has a larger electrochemical stability window width while maintaining high cycling stability and storage stability, thereby expanding the electrochemical window of the battery and effectively improving the electrochemical stability.

It can be seen from the comparison between Example 1 with Comparative Examples 1 and 4; Example 2 with Comparative Examples 1 and 8; Example 3 with Comparative Examples 7 and 8; Example 4 with Comparative Examples 10 and 11; Example 5 with Comparative Examples 7 and 11; Example 6 with Comparative Example 10; Example 11 with Comparative Example 4; Example 12 with Comparative Example 8; Example 13 with Comparative Example 11; Example 16 with Comparative Examples 4 and 12; Example 17 with Comparative Examples 8 and 12; Example 20 with Comparative Examples 14 and 15; and Example 23 with Comparative Examples 17 and 18 that for the positive electrode active material Na₄Fe₃(PO₄)₂P₂O₇, compared with sodium secondary batteries that include only the same single electrolyte as the first electrolyte or the second electrolyte, the sodium secondary battery in this application includes both the first electrolyte and the second electrolyte. This maintains high cycling stability of the battery, and helps to increase the electrochemical stability window width of the battery, expand the electrochemical window of the battery, improve the number of storage days corresponding to an 80% storage capacity retention rate as well, and improve the storage stability.

It can be seen from the comparison between Example 9 with Comparative Examples 2 and 9; Example 10 with Comparative Example 3; Example 14 with Comparative Example 9; Example 18 with Comparative Examples 5 and 13; Example 19 with Comparative Example 6; and Example 21 with Comparative Example 16 that for the positive electrode active material Na[Cu_{1/9}Ni_{2/9}Fe_{1/3}Mn_{1/3}]O₂ or Na_{2/3}Ni_{1/6}Mn_{2/3}Cu_{1/9}Mg_{1/18}O₂ coated with ZrO₂, compared with sodium secondary batteries that include only the same single electrolyte as the first electrolyte or the second electrolyte, the sodium secondary battery in this application includes both the first electrolyte and the second electrolyte. In addition to maintaining the storage stability of the battery, this helps to increase the electrochemical stability window width of the battery, expand the electrochemical window of the battery, and improve the Coulombic efficiency and the number of cycles corresponding to an 80% capacity retention rate of the battery.

It can be seen from the comparison between Example 2 with Examples 9 and 10; Example 5 with Examples 7 and 8; Example 12 with Examples 14 and 15; Example 16 with Examples 18 and 19; Example 20 with Examples 21 and 22, and Example 23 with Examples 24 and 25 that compared with the positive electrode active material including Na[Cu_{1/9}Ni_{2/9}Fe_{1/3}Mn_{1/3}]O₂ or ZrO₂-coated Na_{2/3}Nit_{/6}Mn_{2/3}Cu_{1/9}Mg_{1/18}O₂, the positive electrode active material includes Na₄Fe₃(PO₄)₂P₂O₇. This is beneficial to improving the number of cycles corresponding to an 80% capacity retention rate and the number of storage days corresponding to an 80% storage capacity retention rate of the battery.

It can be seen from the comparison between Example 10 with Example 9; Example 8 with Example 7; Example 15 with Example 14; Example 19 with Example 18; Example 22 with Example 21, and Example 25 with Example 24 that compared with the positive electrode active material Na[Cu_{1/9}Ni_{2/9}Fe_{1/3}Mn_{1/3}]O₂, the positive electrode active material ZrO₂-coated Na_{2/3}Ni_{1/6}Mn_{2/3}Cu_{1/9}Mg_{1/18}O₂ is beneficial to improving the number of cycles corresponding to an 80% capacity retention rate and the number of storage days corresponding to an 80% storage capacity retention rate of the battery.

It can be seen from the comparison between Example 1 with Comparative Examples 1 and 4, Example 2 with Comparative Examples 1 and 8; Example 3 with Comparative Examples 7 and 8; Example 4 with Comparative Examples 10 and 11; Example 5 with Comparative Examples 7 and 11; Example 6 with Comparative Example 10; Example 9 with Comparative Examples 2 and 9; Example 10 with Comparative Example 3; Example 11 with Comparative Example 4; Example 12 with Comparative Example 8, Example 13 with Comparative Example 11; and Example 14 with Comparative Example 9 that the sodium secondary battery in this application includes the first separator, where the first separator includes at least one of a perfluorosulfonic acid resin film replaced by sodium ions, Na_{3.4}Zr_{1.9}Zn_{0.1}Si_{2.2}P_{0.8}O₁₂, and β-Na₂O·11Al₂O₃. This is beneficial to increasing the electrochemical stability window width of the battery, improving the number of storage days corresponding to an 80% storage capacity retention rate of the battery, and enhancing the storage stability.

It can be seen from the comparison between Example 16 with Comparative Examples 4 and 12; Example 17 with Comparative Examples 8 and 12; Example 18 with Comparative Examples 5 and 13; and Example 19 with Comparative Example 6 that the sodium secondary battery in this application includes two second separators, where the first electrolyte and the second electrolyte respectively infiltrate different second separators, and the second separator includes at least one of a polyethylene film, a polypropylene film, or a glass fiber film. This is beneficial to increasing the electrochemical stability window width of the battery and reducing the storage swelling rate of the battery.

It can be seen from the comparison between Example 20 with Comparative Examples 14 and 15; Example 21 with Comparative Example 16; and Example 23 with Comparative Examples 17 and 18 that compared with traditional sodium secondary batteries that include only the same polymer-containing electrolyte as the first electrolyte or the second electrolyte, the sodium secondary battery in this application includes both the first electrolyte and the second electrolyte, and both the first electrolyte and the second electrolyte include the polymer. This is beneficial to increasing the electrochemical stability window width of the battery, reducing the storage swelling rate of the battery, and improving the Coulombic efficiency, the number of cycles corresponding to an 80% capacity retention rate, and the number of days corresponding to an 80% storage capacity retention rate of the battery.

It can be seen from the comparison between Example 1 with Comparative Examples 1 and 4; Example 2 with Comparative Examples 1 and 8; Example 3 with Comparative Examples 7 and 8, Example 4 with Comparative Examples 10 and 11; Example 5 with Comparative Examples 7 and 11; Example 6 with Comparative Example 10; Example 9 with Comparative Examples 2 and 9; Example 10 with Comparative Example 3; Example 11 with Comparative Example 4; Example 12 with Comparative Example 8; Example 13 with Comparative Example 11; Example 14 with Comparative Example 9; Example 16 with Comparative Examples 4 and 12; Example 17 with Comparative Examples 8 and 12; Example 18 with Comparative Examples 5 and 13; Example 19 with Comparative Example 6; Example 20 with Comparative Examples 14 and 15; Example 21 with Comparative Example 16; and Example 23 with Comparative Examples 17 and 18 that the sodium salt in this application includes at least one of sodium perchlorate, sodium hexafluorophosphate, sodium bis(fluorosulfonyl)imide, and sodium bis(trifluoromethanesulfonyl)imide. This is beneficial to increasing the electrochemical stability window width of the battery.

It can be seen from the comparison between Example 20 with Comparative Examples 12 and 13; Example 21 with Comparative Example 16; and Example 23 with Comparative Examples 14 and 15 that both the first electrolyte and the second electrolyte include the polymer, and the polymer includes one or more of polyvinylidene fluoride, polyethylene oxide, perfluoropolyether, and polyvinylpyrrolidone. This is beneficial to increasing the electrochemical stability window width of the battery, reducing the storage swelling rate of the battery, and improving the Coulombic efficiency, number of cycles corresponding to an 80% capacity retention rate and number of storage days corresponding to an 80% storage capacity retention rate of the battery.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A sodium secondary battery, **characterized by** comprising a positive electrode plate, a negative electrode plate, a first electrolyte located on the side of the positive electrode plate, and a second electrolyte located on the side of the negative electrode plate, wherein the first electrolyte and the second electrolyte contain different organic solvents, the first electrolyte contains an ester solvent, a sulfone solvent, or a fluoroether solvent, and the second electrolyte contains an ether solvent or an amide solvent.

2. The sodium secondary battery according to claim 1, **characterized in that** there is at least one interface between the first electrolyte and the second electrolyte.

3. The sodium secondary battery according to claim 1 or 2, **characterized in that** a mass ratio of the first electrolyte to the second electrolyte is from 2/8 to 8/2.

4. The sodium secondary battery according to any one of claims 1 to 3, **characterized in that** the first electrolyte and the second electrolyte are separated by a first separator, wherein the first separator comprises at least one of a perfluorosulfonic acid resin film replaced by sodium ions, a sodium super ionic conductor solid electrolyte, and an oxide solid electrolyte.

5. The sodium secondary battery according to claim 4, wherein the sodium super ionic conductor solid electrolyte comprises Na₃₊ₓM_{y}M'_{2-y}Si_{2-z}P_{z}O₁₂, wherein M and M' independently comprise at least one of Zr, Ca, Mg, Zn, La, Ti, and Nb, 0 ≤ x < 1, 0 ≤ y < 2, and 0 ≤ z < 2; and the oxide solid electrolyte comprises at least one of Na-β-Al₂O₃ and Na-β"-Al₂O₃, wherein Na-β-Al₂O₃ comprises P-Na₂O·11Al₂O₃ and Na-β"-Al₂O₃ comprises β"-Na₂O·5Al₂O₃.

6. The sodium secondary battery according to any one of claims 1 to 3, **characterized in that** the sodium secondary battery comprises at least two second separators, the first electrolyte and the second electrolyte respectively infiltrate into different second separators, the second separator comprises at least one of a polyethylene film, a polypropylene film, and a glass fiber film, and an adding volume per unit capacity V of each of the first electrolyte and the second electrolyte is 3 µL/mAh < V < 10 µL/mAh.

7. The sodium secondary battery according to any one of claims 1 to 3, **characterized in that** a viscosity of the first electrolyte and a viscosity of the second electrolyte are both greater than 500 mPa·s, optionally greater than 1000 mPa·s.

8. The sodium secondary battery according to any one of claims 1 to 7, **characterized in that** the first electrolyte and the second electrolyte both comprise a sodium salt, and based on total masses of the first electrolyte and the second electrolyte respectively, mass percentages of the sodium salts in the first electrolyte and the second electrolyte are both 2% to 70%, optionally 15% to 20%.

9. The sodium secondary battery according to claim 8, **characterized in that** the sodium salt comprises one or more of sodium nitrate, sodium perchlorate, sodium hexafluorophosphate, sodium tetrafluoroborate, sodium tetrafluoroyttrium, sodium hexafluoroarsenate, sodium acetate, sodium trifluoroacetate, sodium bis(oxalato)borate, sodium difluoro(oxalato)borate, sodium tetraphenylborate, sodium trifluoromethanesulfonate, sodium bis(fluorosulfonyl)imide, sodium bis(trifluoromethanesulfonyl)imide, and sodium (perfluorobutylsulfonyl)imide, optionally comprises one or more of sodium hexafluorophosphate, sodium trifluoromethanesulfonate, sodium bis(fluorosulfonyl)imide, and sodium bis(trifluoromethanesulfonyl)imide, and optionally comprises one or more of sodium perchlorate, sodium hexafluorophosphate, sodium bis(fluorosulfonyl)imide, and sodium bis(trifluoromethanesulfonyl)imide.

10. The sodium secondary battery according to any one of claims 1 to 9, **characterized in that** the first electrolyte and/or the second electrolyte comprises a polymer, and based on the total masses of the first electrolyte and the second electrolyte respectively, mass percentages of the polymer in the first electrolyte and the second electrolyte are both 2% to 30%, optionally 10% to 20%.

11. The sodium secondary battery according to claim 10, **characterized in that** the polymer comprises one or more of polyethylene oxide, polyethylene glycol, polyvinylpyrrolidone, polymethyl methacrylate, polyvinylidene fluoride, polyvinyl alcohol, polyacrylonitrile, polyvinyl chloride, polyacrylamide, polytrimethylene carbonate, and perfluoropolyether.

12. The sodium secondary battery according to any one of claims 3 to 11, **characterized in that** the ester solvent comprises one or more of ethylene carbonate, propylene carbonate, butylene carbonate, vinylene carbonate, fluoroethylene carbonate, ethyl methyl carbonate, dimethyl carbonate, diethyl carbonate, dipropyl carbonate, methyl propyl carbonate, ethyl propyl carbonate, gamma-butyrolactone, 1,3-propane sultone, methyl propionate, methyl butyrate, ethyl acetate, ethyl propionate, propyl propionate, and ethyl butyrate;
the sulfone solvent comprises one or more of dimethyl sulfoxide, ethyl methyl sulfone, ethyl isopropyl sulfone, ethyl vinyl sulfone, sulfolane, trifluoromethyl ethyl sulfone, trifluoromethyl propyl sulfone, 1,1,1-trifluoro-3-(methylsulfonyl)propane, 1,1,1-trifluoro-2-(methylsulfonyl)ethane, and 1,1,2,2-tetrafluoro-3-(methylsulfonyl)propane;
the fluoroether solvents comprises one or more of 2,2,3,3-tetrafluoro-1,4-dimethoxybutane, 2-(2-ethoxyethoxy)-1,1,1-trifluoroethane, 1,2-bis(2,2-difluoroethoxy)ethane, 2-(2-(2,2-difluoroethoxy)ethoxy)-1,1,1-trifluoroethane, 1,2-bis(2,2,2-trifluoroethoxy)ethane, 1,1,1,3,3,3-hexafluoroisopropyl methyl ether, methyl ether 2,2,2-trifluoroethyl-1,1,2,3,3,3-hexafluoropropyl ether, 2,2-bis(trifluoromethyl)-1,3-dioxolane, 2,2-dimethoxy-4-(trifluoromethyl)-1,3-dioxolane, 2-ethoxy-4-(trifluoromethyl)-1,3-dioxolane, and octafluorotetrahydrofuran;
the ether solvent comprises one or more of ethylene glycol dimethyl ether, diethylene glycol dimethyl ether, triethylene glycol dimethyl ether, tetraethylene glycol dimethyl ether, ethylene glycol diethyl ether, diethylene glycol diethyl ether, diisopropyl ether, dibutyl ether, diethylene glycol dibutyl ether, 1,4-dimethoxybutane, 1,4-diethoxybutane, 1,3-dioxolane, tetrahydrofuran, 15-crown-5, 12-crown-4, and 18-crown-6; and
the amide solvent comprises one or more of N,N-dimethylformamide, N,N-dimethylacetamide, N,N-dimethylacetoacetamide, 1,1,1-trifluoro-N,N-dimethylmethanesulfonamide, N,O-bis(trimethylsilyl)trifluoroacetamide, 2,3,6-trifluorobenzenesulfonamide, N,N-dimethyl-4-fluorobenzenesulfonamide, and N-methyl-N-(trimethylsilyl)trifluoroacetamide.

13. The sodium secondary battery according to any one of claims 1 to 12, **characterized in that** the sodium secondary battery is a sodium metal battery.

14. The sodium secondary battery according to any one of claims 1 to 13, **characterized in that** the sodium secondary battery is a sodium secondary battery with no negative electrode.

15. The sodium secondary battery according to any one of claims 1 to 14, **characterized in that** the positive electrode plate comprises a positive electrode active material, wherein the positive electrode active material comprises at least one of a layered transition metal oxide, a polyanion compound, and a Prussian blue compound, comprising one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

16. The sodium secondary battery according to claim 15, **characterized in that** a surface of the positive electrode active material has a coating layer, the coating layer comprises one or more of a carbon material, ZrO₂, TiO₂, polyaniline, polypyrrole, poly(3,4-ethylenedioxythiophene), alumina, zinc oxide, titanium oxide, zirconium oxide, magnesium oxide, silicon oxide, lanthanum oxide, sodium fluoride, lithium fluoride, and aluminum fluoride, and the carbon material comprises one or more of amorphous carbon, graphite, and graphene.

17. The sodium secondary battery according to claim 16, **characterized in that** a thickness of the coating layer is from 2 nm to 1000 nm, optionally from 10 nm to 100 nm.

18. The sodium secondary battery according to any one of claims 1 to 17, **characterized in that** the negative electrode plate comprises a negative electrode current collector and a primer layer disposed on at least one surface of the negative electrode current collector, wherein the primer layer comprises one or more of carbon nanotubes, graphite, graphene, silver composite carbon nanoparticles, and tin composite carbon nanoparticles.

19. The sodium secondary battery according to claim 18, **characterized in that** the primer layer has a surface density of 5 g/m² to 50 g/m².

20. The sodium secondary battery according to claim 18 or 19, **characterized in that** a thickness of the primer layer is from 2 µm to 100 µm.

21. A battery module, **characterized by** comprising the sodium secondary battery according to any one of claims 1 to 20.

22. A battery pack, **characterized by** comprising the sodium secondary battery according to any one of claims 1 to 20 or the battery module according to claim 21.

23. An electric apparatus, **characterized by** comprising at least one of the sodium secondary battery according to any one of claims 1 to 20, the battery module according to claim 21, and the battery pack according to claim 22.
